# EUROPEAN PATENT SPECIFICATION

(11) **EP 1 611 716 B1**
(45) Date of publication and mention of the grant of the patent: **29.11.2017**
(21) Application number: 04720090.2
(22) Date of filing: 12.03.2004
(51) Int. Cl.: H04L 12/46, H04W 28/16, H04W 28/18, H04W 28/24, H04W 76/02, H04L 12/919, H04L 12/927, H04L 12/911, H04L 29/08

(54) **RADIO NETWORK FOR COMMUNICATING INTERNET DATA PACKETS CONTAINING DIFFERENT TYPES OF DATA**
FUNKNETZ ZUR ÜBERMITTLUNG VON INTERNETDATENPAKETEN MIT VERSCHIEDENEN DATENTYPEN
RÉSEAU RADIO DE COMMUNICATION DE PAQUETS DE DONNÉES INTERNET CONTENANT DIFFÉRENTS TYPES DE DONNÉES

(30) Priority: 17.03.2003 GB 0306061; 13.10.2003 GB 0323961
(43) Date of publication of application: 04.01.2006
(73) Proprietor: Microsoft Technology Licensing, LLC, Redmond, WA 98052 (US)
(72) Inventor: CHEN, Xiaobo, Swindon, Wiltshire SN5 5DQ (GB)
(74) Representative: Grünecker Patent- und Rechtsanwälte PartG mbB
(86) International application number: PCT/GB2004/001081
(87) International publication number: WO 2004/084502

(56) References cited:
- EP-A- 1 096 742
- EP-A- 1 250 022
- WO-A-02/15627
- WO-A-02/096040
- WO-A-02/098077
- "Digital cellular telecommunications system (Phase 2+);Universal Mobile Telecommunications System (UMTS); End-to-end Quality of Service (QoS) concept and architecture (3GPP TS 23.207 version 5.6.0 Release 5); ETSI TS 123 207" ETSI STANDARDS, EUROPEAN TELECOMMUNICATIONS STANDARDS INSTITUTE, SOPHIA-ANTIPO, FR, vol. 3-SA2, no. V560, December 2002 (2002-12), XP014007853 ISSN: 0000-0001
- "Universal Mobile Telecommunication System (UMTS);UTRAN Iu Interface User Plane Protocols (3GPP TS 25.415 version 3.5.0 Release 1999)" ETSI TS 125 415 V3.5.0, XX, XX, December 2000 (2000-12), pages 1-57, XP002210774
- "Digital cellular telecommunications system (Phase 2+);Universal Mobile Telecommunications System (UMTS); AMR speech codec, wideband; Interface to Iu and Uu (3GPP TS 26.202 version 5.1.0 Release 5); ETSI TS 126 202" ETSI STANDARDS, EUROPEAN TELECOMMUNICATIONS STANDARDS INSTITUTE, SOPHIA-ANTIPO, FR, vol. 3-SA4, no. V510, September 2002 (2002-09), XP014009366 ISSN: 0000-0001

## Description

### Field of the Invention

The present invention relates to telecommunications systems for communicating internet packet data to and/or from a mobile user equipment.

### Background of the Invention

Mobile radio networks such as the Global System for Mobiles (GSM) and the Universal Mobile Telecommunications System (UMTS) can provide a facility for communicating data in circuit switched mode or using data packets. In circuit switched mode a physical communications channel is allocated for a logical communications channel throughout a call. For the communication of data packets, the General Packet Radio Service (GPRS) has been developed. GPRS is a packet radio network, which provides support for a packet-orientated service. A GPRS network attempts to optimise network and radio resources for packet data communications using an Internet Protocol (IP). The GPRS provides a logical architecture, which is related to the circuit switched architecture of a mobile radio system.

To provide an example, WO 02/098077 discusses the case of different bits in a payload of data to be transmitted from a sending application receiving different classes of treatment. The payload data is divided into a first group of bits associated with a first treatment class and a second group of bits associated with a second treatment class. A first packet is created which includes the first group of bits and a first header that identifies the first packet with the first treatment class. Similarly, a second packet is created that includes the second group of bits and second header that identifies the second packet with the second treatment class. Using the first header, the first packet is mapped to a first communications bearer, (e.g., a radio bearer), that is configured to support the first treatment class. Using the second header, the second packet is mapped to a second communications bearer which is configured to support the second treatment class.

A GPRS network includes a core network part and a radio network part. The core network part includes a gateway GPRS support node and at least one serving GPRS support node. The gateway GPRS support node (GGSN) provides an interface between an external packet data network and the GPRS network, and communicates data packets to and/or from the external packet data network from and/or to the mobile user equipment (UE) via the GPRS network. The serving GPRS support node (SGSN) controls communication of data packets between the GGSN and the UE using a radio network controller (RNC) which controls radio resources of a radio network part of the GPRS network.

A Packet Data Protocol (PDP) context request is used to set up a virtual communications channel between the GGSN and the UE. Each data packet specifies a single set of quality of service (QoS) parameters and a radio access bearer is supplied by the RNC in accordance with this set of quality of service parameters. Radio resources provided by the mobile telecommunications network for communicating data packets between the UE and the RNC are a valuable commodity and can be a limiting factor in whether or not a particular radio access bearer can be supported, depending upon for example current loading of the network. As such, it is desirable to use the radio resources as efficiently as possible.

International Patent Application WO 02/098044 A1 discloses a mobile radio communications network which is arranged to communicate different classes of data bits from a payload over a radio interface. Each payload is divided into each different class of data bits in either the application layer or in a lower IP layer. The different classes of data bits are divided into smaller payload fragments. The application layer or the IP layer then generates IP packets along with corresponding treatment information. Each IP packet containing the different class of data bits is transported over the packet radio network. A radio access bearer is established for each IP packet, with a quality of service which can be matched to the payload comprising the different data bit class.

European Patent EP1096742 A1 discloses a packet radio network which is arranged to support multi-media communications. The multi-media communications are supported using the predetermined service classes. The packet radio network is adjusted to communicate data differently in accordance with the different service class, providing a different quality of service for each class. A multi-service packet data context is derived for a subscription, which requests more than one QoS class for supporting a communication requiring more than class of data.

In the Universal Mobile Telecommunications System (UMTS) standards document entitled "UTRAN Iu Interface User Plane Protocols", 3GPP TS 25.415 version 3.5.0 Release 1999 published in December 2000, there is disclosed an arrangement for using a Radio Access Bearer Sub-Flow Combination Indicator (RFCI) for signalling a number of different amounts of different data types in an Adaptive Multi-Rate Speech frame to be communicated by a Radio Access Bearer. A speech frame comprising a plurality of different types of data is generated within a core network part and is provided with an RFCI which indicates a relative amount of each of the different types of data which are contained within the speech frame. The speech frame is used to form a service data unit which is combined with the RFCI to form an Iu UP frame. The Iu UP frame is communicated via layer 1 between the core network and the Radio Network Controller (RNC). The RNC reads the RFCI and in accordance with the amount of data of each type, each of the data types are communicated via different radio access bearers.

### Summary of Invention

According to the present invention there is provided a packet radio network for communicating internet packet data to and/or from a mobile user equipment according to claim 1. Systems, which provide a particular QoS, can be inflexible in that they set up a radio bearer to transmit the entire payload of a data packet in accordance with the same quality of service parameters. This may not make efficient use of radio resources when the data packet payload includes different data types that have different QoS requirements and/or may be of unequal importance.

Embodiments of the present invention can provide a radio access bearer for supporting different types of data within a data packet such as an internet protocol data packet. A radio access bearer is provided for each data type. The quality of service parameters supported by each radio access bearer can be optimised for the characteristics and/or importance of each different data type. As such, radio resources provided by the network can be used more efficiently.

In some embodiments the radio access bearer for each different data type is provided as a sub-flow within a main radio access bearer according to a main set of quality of service parameters. Accordingly, little or no substantial changes are required to a radio network controller which has been developed for an existing network architecture such as for example the GPRS.

A packet radio network, which is arranged to establish a radio access bearer providing a sub-flow for each different data type, can therefore improve an efficiency with which radio resources are used. Furthermore, since the core network is provided with an indication from the UE of the data format and therefore the number of bits in each different data type, the core network does not have to determine the data format of each data packet by parsing the payload of the data packet. As such the core network can work more efficiently because a data unit (service data unit), for transporting the data through the packet radio network, can be generated for each packet without reading every packet.

Various further aspects and features of the present inventions are defined in the appended claims.

### Brief Description of the Drawings

Embodiments of the present invention will now be described by way of example only with reference to the accompanying drawings where like parts are provided with corresponding reference numerals and in which:
Figure 1 schematically illustrates the structure of a VoIP protocol stack;
Figure 2 schematically illustrates parts of a User Equipment which are arranged to communicate data frames generated by an AMR speech codec;
Figure 3 schematically illustrates an Ipv6 data packet, which is arranged to convey a data frame generated by an AMR speech codes;
Figure 4 schematically illustrates an example architecture of a mobile radio network which is arranged to support packet data communications;
Figure 5a schematically illustrates a simplified representation of the mobile network for supporting GPRS shown in Figure 4, and Figure 5b schematically illustrates example parts of the mobile network which are involved in establishing a virtual channel for communicating data frames generated by the AMR speech codec;
Figure 6 schematically illustrates an arrangement for control plane communication of QoS parameters for three different categories of voice data;
Figure 7 is a flow chart providing an example operation of a control plane communication sequence for the arrangement of Figure 6;
Figure 8 is a flow chart showing further stages of the control plane communication sequence for the arrangement of Figure 6;
Figure 9 is a table that lists a number of Radio Access Bearer service attributes associated with the quality of service (QoS) and their corresponding RAB service attribute values (table taken from [2]) for AMR-Wide Band (WB);
Figure 10 is a table listing a Wideband Adaptive Multi-Rate (AMR-WB) bit format for each of eight predetermined speech codec data frame types (data taken from [4]);
Figure 11a is a table that provides guidance for setting the number of bits in each RAB sub-flow according to the relative importance of the data (table taken from [2]), whereas Figure 11b is a table illustrating an interpretation of frame type, mode indication and mode request fields;
Figure 12 schematically illustrates the structure of a known QoS information element that specifies QoS parameters for a single UMTS bearer;
Figure 13 schematically illustrates a PDP context information element according to the present technique which includes a field specifying one of a plurality of service data unit formats for communicating the data packets from the user equipment to the core network, and a field specifying one of a plurality of service data unit formats for communicating the data packets to the user equipment from the core network;
Figure 14 schematically illustrates the protocol stacks within the user plane that facilitate communication of voice data IP packets to and/or from the UE;
Figure 15 schematically illustrates the structure of an Iu-ps frame for VoIP;
Figure 16 schematically illustrates the processing performed on data packets by the user-plane protocol stack of an SGSN;
Figure 17 schematically illustrates the processing performed on data packets by the user-plane protocol stack of the RNC;
Figure 18 is a flow diagram illustrating a process through which a UE establishes a radio access bearer for communicating data frames having different data types;
Figure 19 is a schematic block diagram illustrating an arrangement for adapting a virtual channel to include radio access bearers for a different data format of the AMR speech codec frame, so that the different data format specifying a different data types can be communicated by adapted radio access sub-flow bearers; and
Figure 20 is a flow diagram illustrating a process through which a UE modifies a radio access bearer for communicating data frames having a different data format of different data types, to the data format established for the bearers in the process illustrated in Figure 18.

### Description of the Preferred Embodiments

Example embodiments of the present invention will now be described for an example application of communicating data frames generated by an Adaptive Multi-Rate (AMR) speech codec. However, it will be appreciated that AMR speech codec frames provide one example of data frames having a plurality of different types of data and that the embodiments find corresponding application in communicating data frames having different types of data from any source.

One example application of embodiments of the present invention is providing a facility for voice over IP communications. Voice over IP (VoIP) relates to the transmission of digital voice data in packets using an Internet Protocol rather than using committed circuits of the public switched telephone network (PSTN).

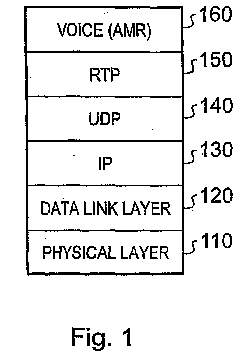

Figure 1 schematically illustrates the structure of a VoIP protocol stack. This provides an illustration of how VoIP operates with other Internet protocols. The protocol stack comprises a physical layer 110, a data link layer 120, an internet protocol (IP) layer 130, a user datagram protocol (UDP) layer 140, a real-time protocol (RTP) layer 150, a voice layer 160.

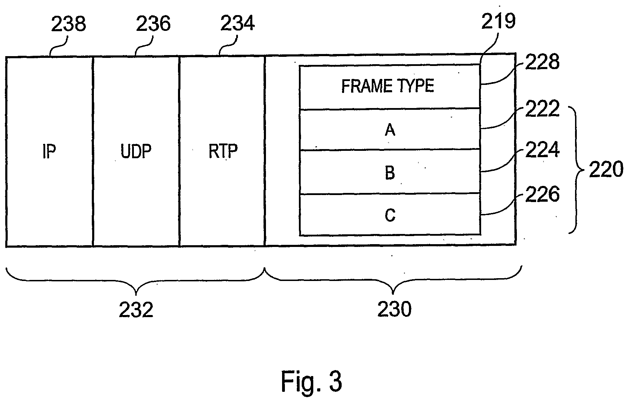

The physical layer 110 defines a media and physical aspects for communicating data using signals. A data link layer 120 supports transfer of traffic over one data link. Depending on the particular protocol employed at this layer error detection and retransmission may be performed. The IP layer 130 is responsible for how data packets (sometimes know as datagrams) are created and transported across a network. The IP layer checks the content of data fields within the IP datagram for instructions which the source IP may have sent. These instructions will typically be to perform some function such as to deliver the data to the next higher layer in the protocol stack, in this case the UDP layer 140. Figure 3 (described below) illustrates the structure of an IP data packet.

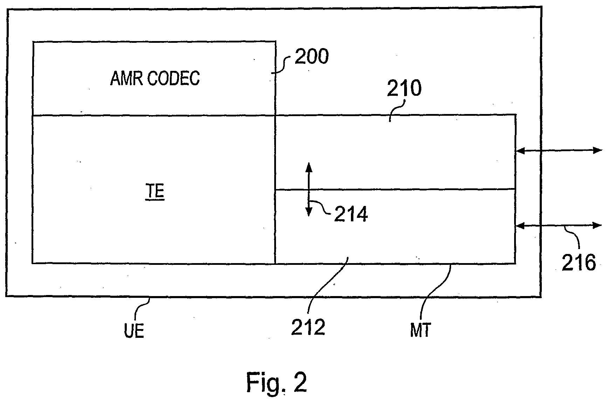

Figure 2 provides an illustration of a mobile User Equipment (UE) which is operable to communicate multi-media data. One example of multi-media data is speech data. For this example so the UE incorporates an Adaptive Variable Rate (AMR) speech codec 200, which may be employed in a VoIP communication. The UE is considered to be composed of a terminal entity TE and a mobile terminal MT. The mobile terminal MT is considered to comprise a non-access specific part 210 and a radio access specific part 212.

Figure 3 provides an example illustration of an IP packet provided as a VoIP communication and utilising a data frame 219 generated in accordance with an AMR speech codec 200. More detail will be provided concerning the generation of the AMR speech codec frames shortly. However with respect to advantages provided by embodiments of the present invention, the IP packet shown in Figure 3 provides a data packet having a plurality of different types of data 220. The different data types are provided within different data fields 222, 224, 226, which provide different amounts of data, which may also have a different importance. The data frame 219 generated by the AMR speech codec 200 also includes a header 228, which provides an indication of the type of frame produced by the AMR codec in accordance with a current data rate being generated. The data frame 219 is transported in a payload part 230 of the IP packet. The pay load of the IP packet also includes a header part 232, which includes an RTP field 234, a UDP field 236 and an IP header field 238.

As will be explained in the following section, embodiments of the present invention provide an arrangement for communicating each of the different types of data using a radio access bearer providing different quality of service parameters in accordance with the data type. By using different quality of service parameters a more efficient use of the radio resources may be effected. However in order to establish different quality-of-service parameters for each data type, a packet radio network must be provided with an indication of the data format of the frame of data comprising the different data types. As for the example of the AMR speech codec, this is effected by the mobile terminal part MT of the UE indicating the current data rate that can be supported and accordingly the frame type to be used. As such the non-radio access part 210 of the mobile terminal MT is provided with an indication from the radio specific part 212 of the frame type to be used, as illustrated by an arrow 214 from the radio access part 212. The radio access part may determine the current rate to be used from currently experienced conditions for radio communications or may be forced to use a particular rate by the packet radio network. Communication with the packet radio network is represented by an arrow 216. As will be explained, the non-access part then establishes a virtual channel for communicating the data frames, by informing a core network part of a packet radio network of the data format to be used. This is represented by an arrow 218. As will be explained in the next section, the virtual channel is established by the packet radio network, which provides a radio-access bearer with sub-flows for each of the different data types. The mobile terminal MT may then inform the terminal equipment of the AMR speech coding rate to use.

### Mobile Packet Radio Network Architecture

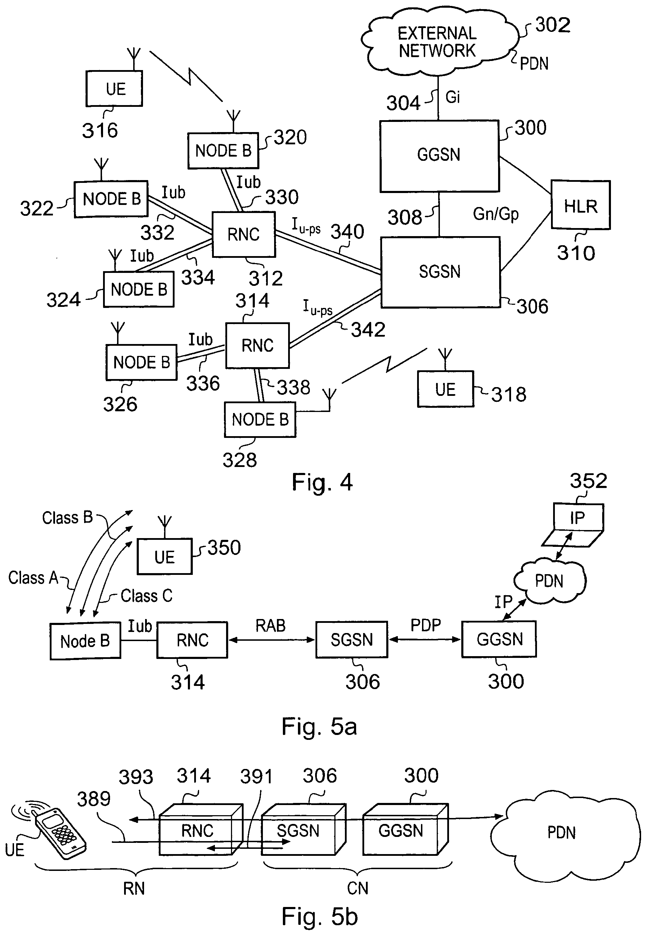

An example architecture of a mobile radio network which is arranged to support packet data communications is provided in Figure 4. The terminology and architecture used in Figure 4 corresponds to that used for the UMTS and that proposed for 3G as administered by the 3GPP. In Figure 4, a Gateway GPRS Support Node (GGSN) is connected to an external Packet Data network 302, - (PDN). The external PDN includes a data communicated as packets using the Internet Protocol (IP). An interface 304 between the GGSN and the external network is labelled Gi which has been standardised although further aspects are being standardised. Also connected to the GGSN is a Serving GPRS Support Node (SGSN) 306 via an interface 308 labelled as Gn/Gp which is also being standardised.

The GGSN and the SGSN are two network components, which are required to support GPRS. The GGSN acts as the gateway between the external packet data networks (PDN) and the mobile network, which supports GPRS. The GGSN contains sufficient information to route incoming IP data packets to the SGSN that is serving a particular UE which is mobile and receives data via a radio access facility provided by the mobile telecommunications network. For the example embodiment the radio access facility is provided in accordance with the Universal Terrestrial Radio Access Network (UTRAN) system which is specified in accordance with the -3GPP standard. The SGSN is connected to the GGSN via a Gn interface if the SGSN is within the same Public Land Mobile Network (PLMN), and connected via the Gp interface to GGSNs belonging to other PLMNs.

An SGSN provides mobility management of UEs which are moving within an area supported by the mobile radio network. To this end, the SGSN is provided with access to a Home Location Register (HLR) 310. The SGSN is arranged to route data packets to Radio Network Controllers (RNC) 312, 314 for communication via the UTRAN radio access facility to mobile users UE 316, 318. The UTRAN radio access facility is provided using Node B apparatus 320, 322, 324, 326, 328, which effectively form base stations providing radio coverage for the area served by the mobile telecommunications network. The interface 330, 332, 334, 336, 338 between each RNC 312, 314 and the Node B apparatus 320, 322, 324, 326, 328, are labelled Iub and conform to an established or evolving standard. Similarly the interfaces 340, 342 between the SGSN and each RNC 312, 314 are labelled as Iu-ps and is an evolving standard.

### Communication of Unequally Important Data

Embodiments of the present invention provide a facility for communicating data in the form of IP packets to and from the UE 316, 318 in a way which attempts to optimise the radio resources with respect to the importance of the data in the payload of the IP packet. Data communicated within the IP packets may include sections which provide different parameters or fields of unequal importance. As explained above, a speech-coded frame of data such as data generated by ARM codec is one example of data having fields of unequal importance.

It is known that AMR speech codecs produce data frames of a predetermined length which contain fields of different types of data which have different types of characteristics and/or may be of unequal importance. One example of such a speech codec is known as the Adaptive Multi-Rate Speech (AMR) codec, which has been standardised by the European Telecommunications Standards Institute (ETSI) and specified for different rates by the 3GPP (see [2]). The AMR provides a data frame having up to three data fields which are referred to as A, B and C bits, which are of different importance. The A-bits provided a basic level of audio information from which speech can be understood, although the level of fidelity produced may not be sufficient to identify the speaker. The B-bits provide a further level of fidelity as do the C-bits. Accordingly the number of A, B and C bits can be adapted in accordance with radio resources which are available to communicate the data fields. As such a different QoS may be applied to each of the different fields, examples of the fields being given in [2] which provides an example of wideband AMR (AMR-WB) coded frames for - for UMTS. For the AMR-WB, no C-bits are provided due to a restricted capacity for communicating data through wideband UMTS.

In order to determine the number of data bits in each of the three fields of an AMR data frame, it is known for a Radio Access Bearer sub-Flow Combination Indicator (RFCI) to be provided. Therefore a packet radio network according to embodiments of the invention is arranged to provide a corresponding RFCI. For AMR data frames carried by IP packets the SGSN must identify the data bits for different fields of the AMR-frame and provide an appropriate RFCI as explained for embodiments of the invention shortly.

Figure 5a provides a simplified representation of the mobile network for supporting GPRS shown in Figure 4. In Figure 5a, a peer-to-peer communications path is provided in accordance with embodiments of the invention for communicating data via IP packets in which the payload data includes fields of unequal importance. The IP packets are communicated between a UE 350, and an IP host/terminal 352 via the GGSN 300, SGSN 306 and an RNC 314 of the mobile network of Figure 4. As shown in Figure 5, the data carried over IP between the RNC and the UE includes the three fields A, B and C of the AMR speech coded data frame.

With respect to the protocols within the GGSN and the SGSN, the IP packet, which is to be communicated to the UE and from the UE forms a Packet Data Unit (PDU). The form of the PDU must be known to the protocols within the SSGN, the RNC as well as the Node B apparatus. The PDU is a generic term referring to the form of a packet, which is communicated within the GPRS network. It is noted that the PDU is referred to as a Service Data Unit (SDU) when referring to a data packet communicated to the RLC in UTRAN, while PDU is generally used to refer to a data packet, especially to the SGSN and GGSN in the core network.

Embodiments of the present invention provide a facility for communicating data in the form of IP packets via a radio access network with the effect of improving the efficiency with which radio resources are used. To this end, the parts of a mobile radio network which support packet access are adapted to identify different data fields having different levels of importance and to establish radio access bearers having sub-flows, which provide a different QoS matched the type of the data. This is because, when IP packets carry data of different types such as speech coded information generated by for example the AMR codecs, UTRAN needs to adapt the radio access bearers to match the relative importance of the data. Each radio bearer may be optimised in accordance with the relative importance and the characteristics of the different data fields. Figure 5b illustrates generally a process through which the parts of the network shown in Figure 5a are operable to establish the radio access bearers for communicating data frames having different types of data. In Figure 5b the UE establishes a SIP session 393, including a codec mode negotiation, with a multi-media correspondent node attached to the external PDN. Following session establishment, the UE informs the core network part CN (e.g. SGSN) of the data format by sending a request 389 for a radio access bearer to a core network part CN of the packet radio network. The core network part includes a GGSN 300 and an SGSN 306. As will be explained in the next section, the request 380 includes a data field which specifies one of a predetermined set of data frames which are to be used for up-link communications (from the UE to the PDN) and a corresponding field for down-link communications (to the UE from the PDN). By identifying the specified data frame, which determines a number of different types of data in the frame and the amount of data in each frame, the core network part CN is arranged to establish the radio access bearers 391. After the radio access bearers have been established the UE can exchange IP data packets which include the data frames with different data types with the PDN via the radio access bearers. The radio access bearers are provided with sub-flow bearers which are optimised for the different data types and therefore use radio communication resources more efficiently.

### Adaptation of the PDP Context Request

As specified in a 3GPP standards document 3GPP TS 23.107 [3] there are at present four different QoS types, referred to as Conventional, Streaming, Interactive and Background Classes. Embodiments of the present invention provide an adaptation of the PDP context activation request to include a request for a radio bearer having a plurality of sub-flows, each sub-flow radio bearer providing a different QoS. One example of how the radio access bearer may be provided for each sub-flow is where Un-equal Error Protection (UEP) is provided for each sub-flow radio access bearer. This is explained in more detail in the following section.

### PDP Context Activation

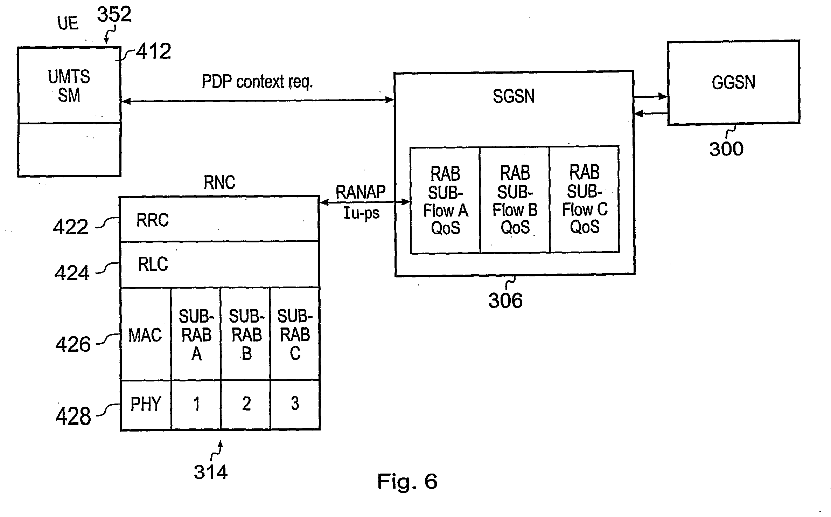

Figure 6 schematically illustrates an arrangement for control plane communication of different types of data. The arrangement comprises the User Equipment (UE) 352, the Radio Network Controller (RNC) 314, the Serving Global Packet Radio Service (GPRS) Support Node (SGSN) 306 and the Gateway GPRS Support Node (GGSN) 300.

An application called a UMTS session manager 412 is responsible for negotiating with the SGSN 430 for access to the radio resources. The access is mediated using a Packet Data Protocol (PDP). In order for the user to be able to transfer data a "PDP context" must be activated in the UE 352, SGSN 306 and GGSN 300. PDP context activation is initiated by an application on the user equipment 352 and is analogous to logging on to the required destination network.

The Radio Network Controller (RNC) 314 controls the use and integrity of the radio resources. It provides functionality that can be separated into four distinct layers: a Radio Resource Control (RRC) layer 422; a Radio Link Control (RLC) layer 424; a Media Access Control (MAC) 426 layer; and a physical layer 428.

The Radio Resource Control layer 422 negotiates in the control plane with the SGSN 306 to establish access to the radio resources in dependence upon a RAB set-up request from the SGSN. The Radio Link Control layer 424 sets up a connection for user data, rather than control data to pass through. The Media Access Control Layer 426 determines how the data of each data flow is transmitted. For example, it is responsible allocating and managing a dedicated channel or a shared channel (which is less wasteful of bandwidth) for the data flow. The Radio Access Bearer (RAB) sub-flows are assigned by the MAC 426. The physical layer 428 is responsible for conveying data over a transmission medium and oversees data transmission. The physical layer 428 is responsible for example for applying an appropriate error correction code to the outgoing data stream. For example, a different error correction coding level may be applied by the physical layer 428 to each of the RAB sub-flows defined by the MAC 426.

The SGSN 306 receives the PDP context activation request messages from the UE 352 which specify a format of the data in the data frame having different data types requested by the user application for the desired data link. The SGSN 306 negotiates with the RNC 314 for radio access in accordance with the specified QoS parameters. The SGSN 306 stores subscription information and location information for packet switched services for each associated registered subscriber. The QoS information is communicated from the SGSN 306 to the RNC 314 using a signalling protocol called the Radio Access Network Application Part (RANAP) protocol.

RANAP is a radio network layer signalling protocol for the interface between the core network (i.e. SGSN 306) and the UTRAN. The UTRAN is the part of the UMTS network that comprises the RNC and Node-Bs. RANAP handles signalling for packet switched data between the RNC 314 and SGSN 306. It is also capable of handling signalling for circuit switched data between the RNC 314 and a - Mobile Switching Centre (not shown). The general functions that RANAP is capable of performing are: facilitating general UTRAN procedures from the core network such as paging; separating each UE on a protocol level for mobile-specific signalling management; transferring non-access signalling; performing Serving Radio Network Subsystem Relocation; and requesting and managing various types of UTRAN Radio Access Bearers (RABs). According to the present technique, RANAP is used by the SGSN to request the establishment Radio Access Bearer sub-flows in the RNC 314 in accordance with the format of the data frames, which is specified in the PDP context activation request.

The GGSN 300 acts as an interface between the UMTS radio-packet backbone and the external packet data networks, that is, it provides an interface between the data network and the IP network. The packets received by the GGSN through the Gi interface are forwarded to the responsible SGSN 306. For this purpose the GGSN 300 stores the current SGSN address of the user profile in a location register. The GGSN 300 also stores subscription information and routing information for each subscriber for which it has at least one active PDP context.

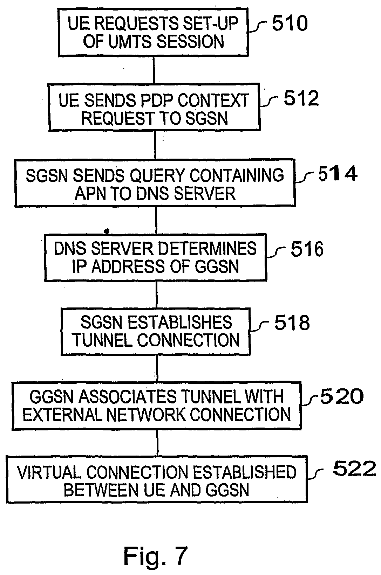

Figure 7 is a flow chart providing an example operation of a control plane communication sequence for the arrangement of Figure 6. At stage 510 a user application of the UE 352 initiates a PDP context request activation via the UMTS session manager 412. The Context Activation procedure itself requires allocation of radio resources. At stage 512 the UE 410 sends the "activate PDP context" request to the SGSN 306. A field in the PDP context request specifies the data format of the data frame to be carried from the UE to the core network CN, and correspondingly a field for specifying the data format of the data frames to be carried to the UE from the core network CN. Accordingly QoS parameters for the A-bits, B-bits and - the C-bits can be established by the radio network to optimise radio resources accordingly.

The PDP context activation message additionally comprises the access point name of the external network to which connectivity is requested, user identity information and IP configuration parameters. At stage 514 the SGNS 306 receives the PDP context request and validates the user from a subscription record. If the request is valid then the SGSN 306 sends a query containing the requested access point name to a domain name server (not shown). At stage 516 the domain name server uses the supplied access point name information to determine the address of at least one GGSN 300 that will provide the required connectivity to the external network. The IP address of the selected GGSN 300 is supplied to the SGSN 306. At stage 518 the SGSN uses the supplied GGSN IP address to request a virtual connection channel to the GGSN 300 using a GPRS tunnelling protocol. A connection tunnel is a predefined virtual channel across which encapsulated user data can be transmitted. At stage 520 the GGSN associates the tunnel with the external network connection. At stage 522 the GGSN receives the connection tunnel request and establishes the requested tunnel and returns an IP address to be conveyed to the UE 352. Accordingly a virtual connection is established between the UE 352 and the GGSN 300. The GGSN 300 has a further association between the connection tunnel and the physical interface to the external network. Accordingly, data transfer is enabled between the UE 352 and the external network.

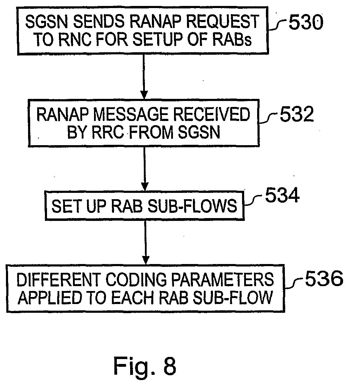

Figure 8 is a flow chart that schematically illustrates the control plane negotiations between the SGSN 306 and the RNC 314 for the allocation of radio resources according to distinct QoS requirements for the A-bits, B-bits and C-bits of the voice data. At stage 530, on receipt of the PDP context information element specifying one of the predefined frame formats, the SGSN 306 sends a RANAP request to the RNC 314 requesting the set-up of a Radio Access Bearer for the data transfer requested by the user application. The RANAP request includes a request for each of the three independent sets of QoS parameters for the A, B and C bits respectively. At stage 532 the Radio Resource Control Layer 422 of the RNC 314 receives the RANAP request and passes the request to the Media Access Control layer 426. At stage 534 the MAC layer established three independent RAB sub-flows for the A-bits, the B-bits and the C-bits respectively. The category of sub-flow selected is specified by the RANAP for each of the three voice categories. Finally at stage 536 the physical layer parameters are separately configured for each of the three sub-flows. In particular a different level of error protection is applied to each of the three sub-flows.

To support unequal error protection (i.e. different levels of error protection for different classes of voice data bits) a number of QoS parameters should be separately configured for each class of voice bits (A-bits, B-bits and C-bits). The RAB assignment procedure is initiated by the SGSN 306 based on information in the PDP context request. The RNC 314 then establishes the UMTS radio access bearers according to the QoS parameters. Only a single RAB can be allocated per PDP context request but the single RAB is sub-divided into one or more RAB co-ordinated sub-flows.

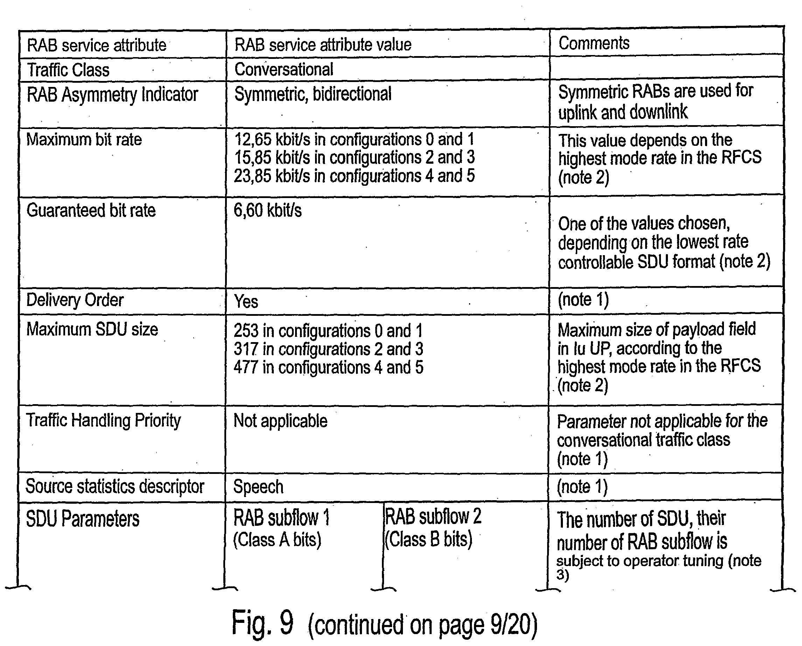

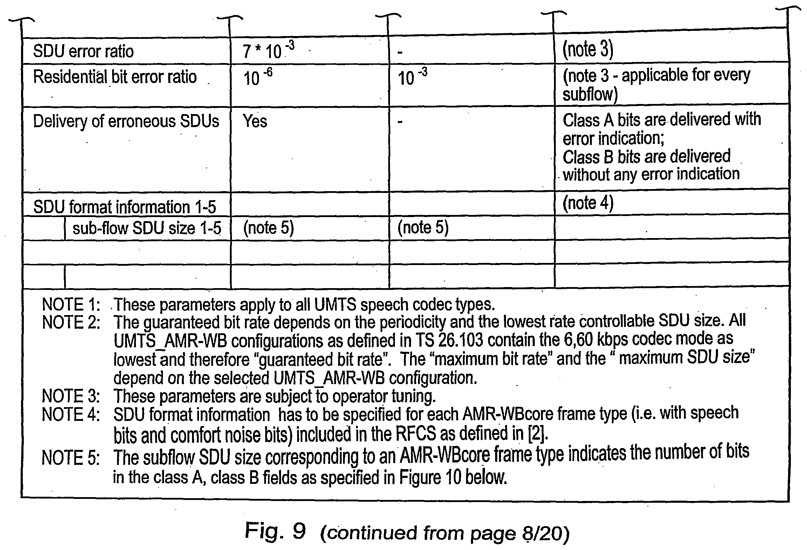

Figure 9 provides a table which lists a number of RAB service attributes associated with the QoS and their corresponding RAB service attribute values. The table gives the RAB parameters for wideband adaptive multi-rate coding (as given in table 5.1 of [2]). According to the present technique the same predefined RAB parameters may be used for packet switched voice as for circuit switched voice. It can be seen from Figure 9 that a first RAB sub-flow is associated with the A-bits and a second RAB sub-flow is associated with the B-bits. The residual bit error ratio for the first RAB sub-flow is 10⁻⁶ whereas the residual bit error ratio for the second RAB sub-flow is 10⁻³. This reflects that the error correction level applied to the A-bits is higher than the error correction level applied to the B-bits. The service data unit (SDU) format is such that for each of five predetermined speech codec data frame types (1 through 5) a different number of bits are allocated to each voice data class A, B and C.

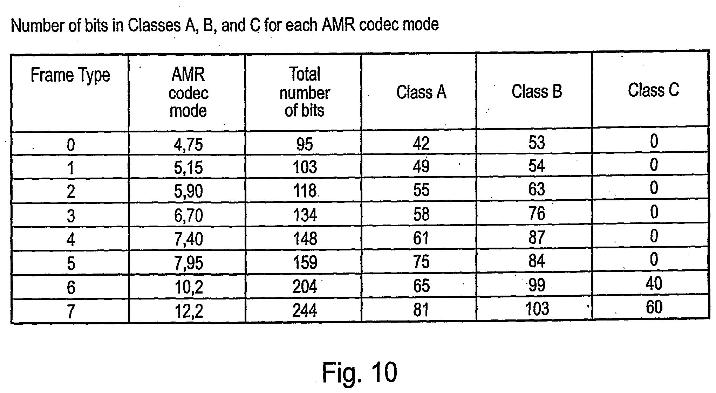

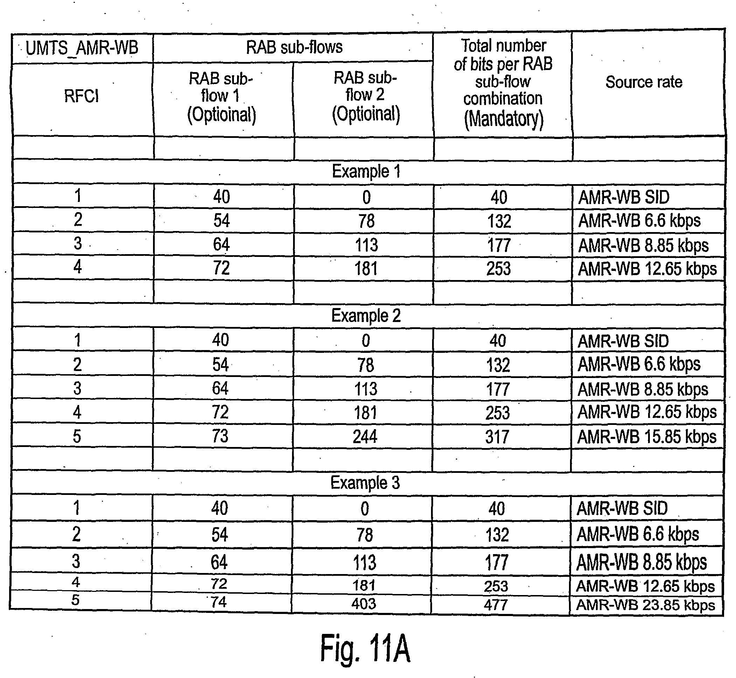

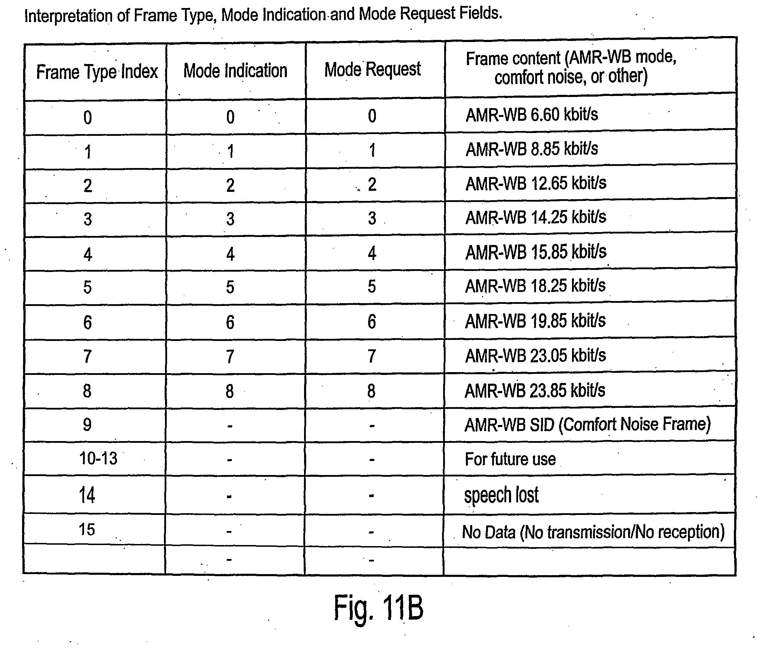

An example of the bit allocations for each frame type is listed in Figure 10 for Wideband- AMR (W-AMR). This data set was taken from [3]. The number of RAB sub-flows and their associated attributes such as residual bit error ratio and delivery of erroneous SDUs are defined at the stage of RAB establishment in the SGSN 430 based on the information element of the PDP context request. The RAB sub-flow attributes are signalled to the RNC 314 using the RANAP radio access bearer establishment request as illustrated in Figure 6. The total number of bits in all sub-flows for one RAB sub-flow combination (RFC) should correspond to the sum of the bit-allocations for the A, B and C bits specified in Figure 10 for the corresponding generic wideband AMR codec mode (associated with the frame type). Figure 11a which is taken from [2], provides guidance for setting the number of bits in each RAB sub-flow according to the relative importance of the data. Correspondingly, Figure 11b provides an illustration of frame type indexes providing an indication of a frame type, a mode indication and a mode request with respect to the frame content. The frame type index can therefore be used in the field within the PDP context request to specify the frame type and therefore uniquely identify the content of each speech frame.

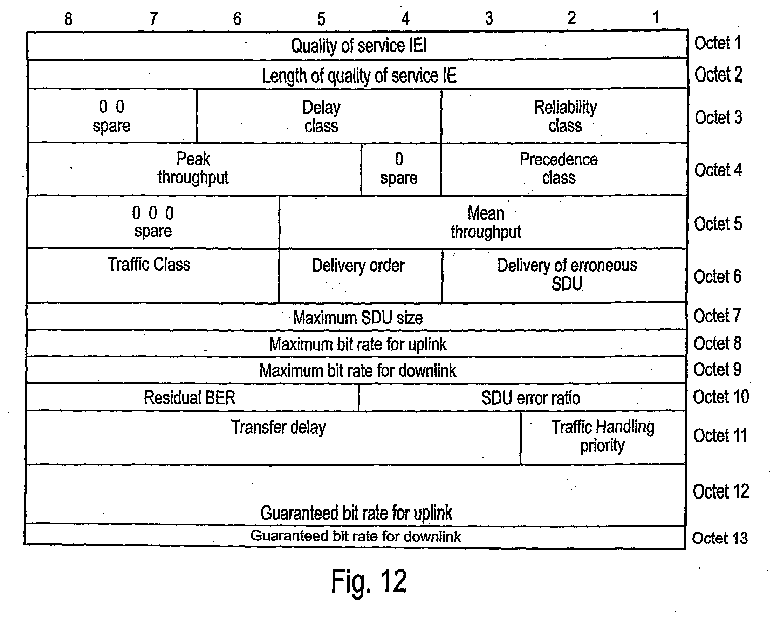

Figure 12 schematically illustrates the structure of a known QoS information element that specifies QoS parameters for a single radio access bearer as specified in [5]. The information element comprises 13 octets of data specifying various QoS parameters associated with the given radio access bearer.

### Adapted PDP Context Information

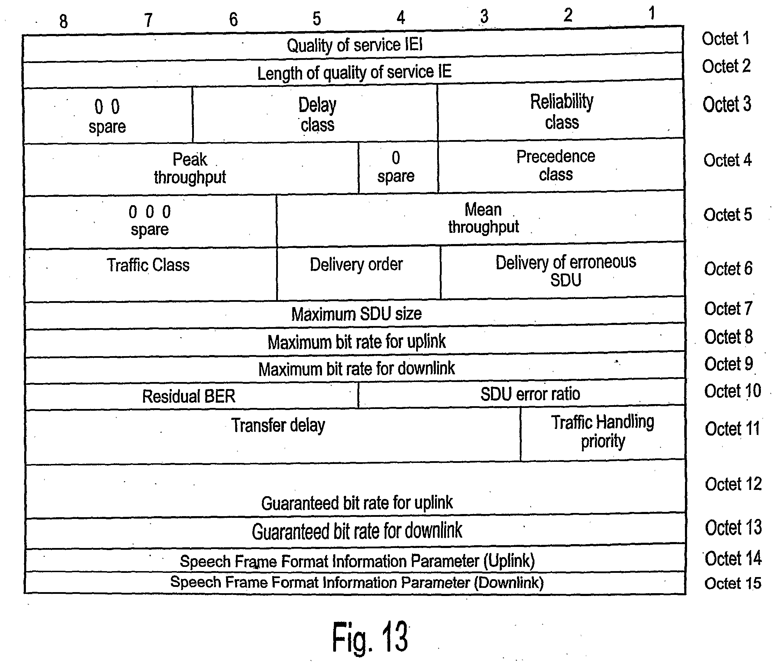

Figure 13 schematically illustrates a PDP context information element according to the present technique that specifies the data format of the data packets carrying different types of data. As illustrated by the example of the AMR-speech frames, the format of the data packet is specified by a field for up-link communication and a field specified for down-link communications. Each field conveys a predefined index identifying one of a plurality of data formats. Optional field 1 for the up-link data format occupies octet 14 of the information element. Optional field 2 for the down-link data format occupies octet 15 of the information element. For one example implementation, setting bit 8 of octet 5 equal to zero indicates that no optional data field 1 or optional data field 2 exists. However, setting bit 8 of octet 5 equal to 1 indicates that at least optional field 1 and possibly optional field 2 is present in the information element.

### User Plane Adaptation

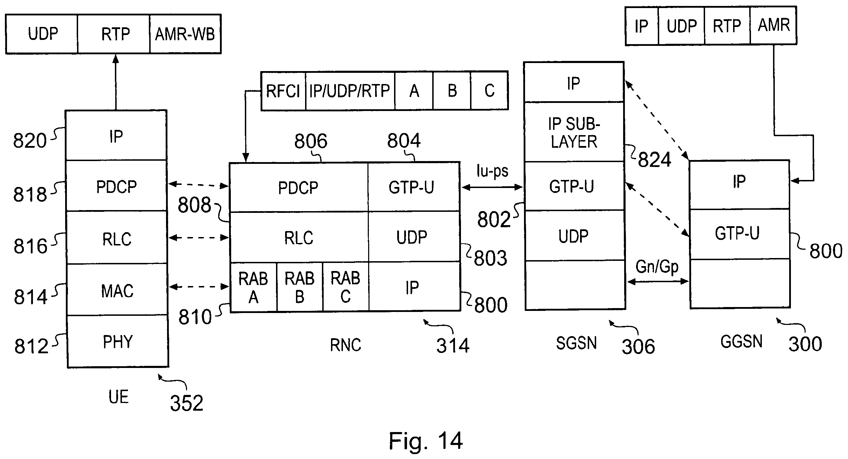

Having established the radio access bearers for each of the data fields within the payload of IP packets, Figure 14 provides an illustration of protocol stacks within the GGSN 300, SGSN 306, RNC 314 and UE 352 which are adapted to facilitate communication of these IPs to and from the UE.

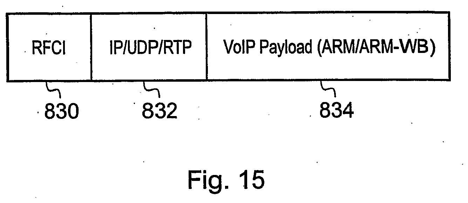

The GGSN 300, the SGSN 306 and the RNC include at a link layer the GPRS tunnelling protocol (GTP) which communicates both user data (GTP-U) and signalling data (GTP_C). The GTP-U tunnels user data between the GGSN, SGSN and the RNC. Transport protocols carry GTP data units via the GGSN, SGSN and RNC. For the example embodiments these data units across the Iu-ps interface will be referred to as Iu-ps frames. Figure 15 schematically illustrates the structure of an Iu-ps frame. The Iu-ps frame comprises an RAB sub-flow combination index (RFCI) portion 830, an IP/UDP/RTP header portion 832 and a VoIP payload 834 of adaptive multi-rate coded voice data. Transport protocols include the User Datagram Protocol (UDP) which communicates Iu-ps frames using the Internet Protocol from the SGSN to the UE. In essence as shown in Figure 14, the GTP-U conveys the Iu-ps frames between the SGSN and the RNC using lower layer protocols which are known to those familiar with the GRPS/UMTS architecture and disclosed in [1] and so these will not be reproduced here. However, the abbreviations that have been used in Figure 14 to represent protocols and layers for communication of IP packets in the RNC and UE are summarised as follows:
For the RNC:
Layer 800 is the IP transport layer utilising the Internet Protocol to communicate data in packet form;
Layer 803 is the control protocol layer utilising the User Datagram Protocol for transporting IP packets;
Layer 804 is the GTP-U protocol;
Layer 806 is the Packet Data Convergence Protocol (PDCP) layer which maps network level protocols onto link layer protocols such as Radio Link Control (RLC) layer for transport on the radio access bearers. PDCP is capable of performing IP header compression and decompression. The header compression method is specific to the particular network layer, transport layer and upper layer protocol used e.g. RTP/UDP/IP.

Layer 808 is the RLC layer which maps the data from the PDCP layer onto the radio access bearers;
Layer 810 is the Media Access Control (MAC) sub-layer which maps the data from each radio access bearer onto UTRAN physical radio channels;
For the UE:
Layer 812 PHY represents the physical layer including transmission on the physical radio channels provided in accordance with UTRAN from the RNC via Node B apparatus;
Layer 814 is the MAC layer corresponding to that in the RNC;
Layer 816 is the RLC corresponding to the RLC sub-layer in the RNC;
Layer 818 is the PDCP sub-layer corresponding to the PDCP layer in the RNC.

### Operation of Packet Radio Network Using Sub-flow Bearers

The GGSN 300 receives an IP packet from the external network as illustrated in Figures 4 and 5 and forwards it through GTP_U to the SGSN. An IP processing sub-layer 824 in SGSN 306, retrieves the frame type for the established virtual communications channel, which in one example is pre-stored in the SGSN. The frame type provides the number of bits which are present in the different un-equally important data fields. For the example of a data frame from the AMR speech codec, the frame type provides the number of bits in the A, B and C fields according to a predetermined number of bits within these fields. From the number of bits present in the different fields, the IP processing sub-layer generates an RFCI field providing an indication to each of the other network elements SGSN, RNC, UE which of a predetermined set of data formats the data frame represents. According to this information, the different un-equally important data fields can be mapped onto the appropriate radio access bearers.

The IP sub-layer 824 receives the IP payload, and retreives the pre-stored frame type which is associated with the virtual communications channel. The PDCP in the RNC compresses the header of the IP data packet. The SGSN generates the RFCI and then the Iu-ps format.

The Iu-ps frame is formed from the RFCI and the data by the IP processing sub-layer 824. The Iu-ps frame is therefore in a form in which it can be transmitted via the SGSN 306 to the RNC 314 via the IP transport layer 800 of the RNC, the UDP layer 802 to the GTP-u layer 804. Within the PDPC layer 806 of the RNC, the - IP header and UDP/RTP fields are removed by the PDPC 806 before the remaining data within the data is transported via the RLC and MAC layers to the UE. The zero-byte header compression is performed in accordance with RFC 3243.

The data from the different fields, which for the AMR-frame comprises the A, B and C bits are transmitted via different sub-flows in the radio access bearer RAB sub-flow A, RAB sub-flow B, RAB sub-flow C, each providing a different QoS which is matched to the importance and characteristics of the data from each field. Since the RNC can detect the RFCI provided with the SDU, the payload data can be matched to the appropriate bearer.

At the UE, after the communicated data has passed through the PHY layer 821, the MAC layer 814 and the RLC layer 816, the PDCP layer re-applies an IP/UDP/RTP header to the data so that an IP packet which conforms to the IP protocol can be passed to the application layer 352 such as SIP applications.

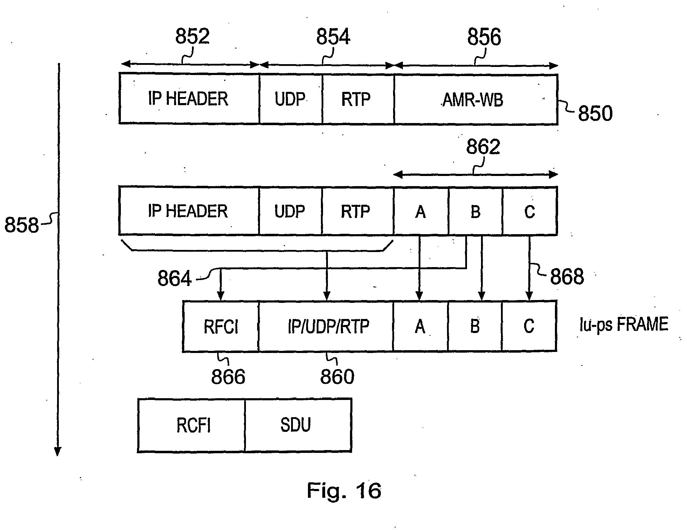

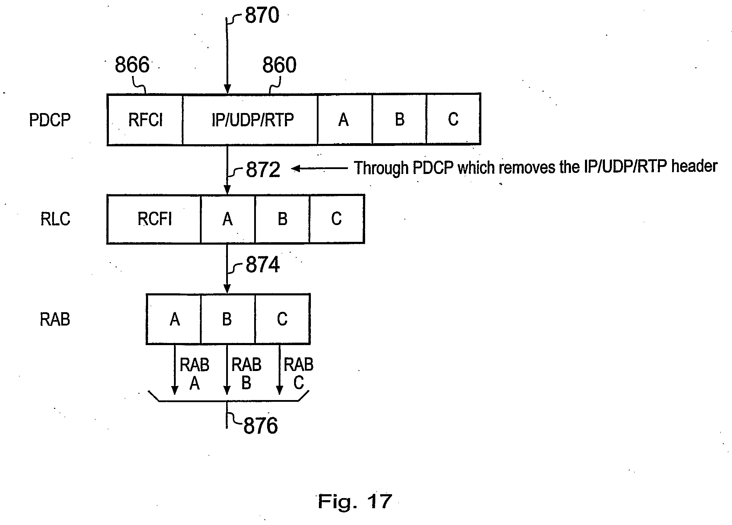

In summary an IP packet containing for example an AMR speech frame is transported through the mobile radio network using the following operations, which are represented in Figures 16 and 17.

Figure 16 schematically illustrates the processing performed on data packets by the user-plane protocol stack of the SGSN. As shown in Figure 16, in the GGSN an IP packet 850 containing an IP header 852, UDP/RTP fields 854 and a data field providing an AMR-WB speech coded frame 856 is received in the IP processing layer 824. The received IP packet is then processed as represented by an arrow 858, in accordance with the following operations:

The IP processing sub-layer 824 knows the format of the AMR speech codec field 856 as represented by arrows 862, from the data format field submitted within the PDP context request and stored in association with the channel established in response to the request. The number of bits in each of the A, B, C data fields are therefore known to the IP processing sub-layer 824, from which an RFCI 866 identifying the AMR speech codec frame can be generated. As represented by an arrow 864, the IP processing layer generates an RFCI, which is appended to the VoIP packet to form a separate field 866 in the Iu-ps frame.

The IP processing layer 824 of the SGSN (see Figure 14), then forms the remainder of the Iu-ps frame from the A, B, C-bits of the AMR speech frame, as illustrated by arrows 868.

The Iu-ps frame is then transported from the SGSN 306 to the RNC 314 in accordance with the IP protocol, via the various protocol layers including the GTP-U.

When the Iu-ps frame is received at the GTP-U protocol layer 804 in the RNC 314, the Iu-ps frame is passed to the PDCP for processing before transmission via the radio access interface via the Node B apparatus to the UE 352.

Figure 17 schematically illustrates the processing performed on data packets by the user-plane protocol stack of the RNC. As illustrated by a process step 870, the Iu-ps frame is received by the PDCP layer 806 of the RNC which then removes the - IP/UDP/RTP Header 860, before passing the remainder of the SDU to the RLC layer 808 as illustrated by the arrow 872. The RLC layer 808 then uses the RFCI 866 to separate the A, B, and C data fields, which is illustrated by an arrow 874. As illustrated by the arrows 876, the A, B and C data fields are transported via respectively radio access bearers RAB A, RAB B and RAB C in the MAC layer 810 to the UE 812.

Within the UE 352, the AMR speech frame is reformed in the RLC layer 816 after transport via the PHY layer 812 and the MAC layer 814. The PDCP layer 818 then regenerates the IP/UPD/RTP headers which is passed to the application layer 820 of the UE.

### Summary of Operation of RAB Establishment

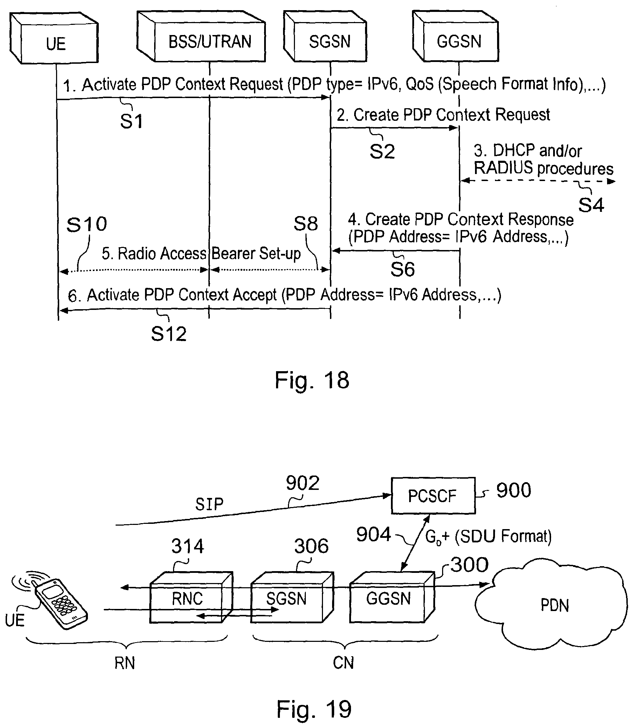

Figure 18 provides a flow diagram illustrating a process by which the UE informs the core network part CN (SGSN) via PDP Context Activation Procedure with a QoS Information Element providing a speech format information negotiated and agreed during the VoIP/IMS session set-up. The flow diagram is summarised as follows:
S1: The UE sends a PDP context activation request to the SGSN 306. The context activation request includes a data field which includes a data value identifying one of the frame type formats according to a rate of the AMR-codec established during session negotiation. This data field is provided for up-link communications, which is from the UE to the core network part CN. A corresponding field may be provided to specify the data format of the frame to be use for the down-link communication from the core network to the UE.
S2: The SGSN 306 signals to the GGSN to create a PDP context request to establish, within the core network, a virtual communications channel for communicating the packet data including the data frames having different types of data.
S4: The GGSN communicates with a correspondent node attached to an external Packet Data Network (PDN) in accordance with a Dynamic Host Configuration Protocol (DHCP) to establish a stateless auto-configuration of the UE to provide an Ipv6 address.
S6: The GGSN responds to the PDP context activation request with an established PDP address, which is the IPv6 address.
S8: The SGSN 306 establishes a Radio Access Bearer for carrying the data packets from the UE to the core network and/or from the core network to the UE. The data packets are provided with a Radio Access Sub-flow Indicator in accordance with the format of the data being communicated.
S10: The RNC 314 (BSS/UTRAN) establishes a sub-flow bearer having different Quality of Service parameters for each of the data types of the data frame carried in the IP data packets.
S12: The SGSN communicates a PDP context activation message to the UE, indicating that the PDP context activation has been accepted and providing the PDP address, which is the established IPv6 address.

### Change of Frame Type

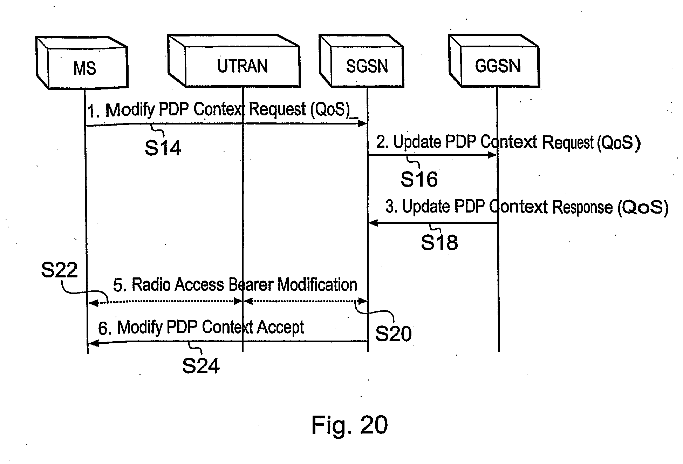

As described above the radio access sub-flow bearers are established for the different data types, using the adapted PDP context activation request. However the frame format may change during a session. Embodiments of the present invention can provide a packet data network in which at least one of the data formats for communicating the data packets from the user equipment or to the user equipment is changed after establishment. One of the mobile user equipment and the serving support node are operable to change the data format for communicating the packet data to a different one of the plurality of data formats, the different data format specifying a different amount of data in each of the different data types. In one example, the UE sends a PDP context modification request with a different value in the data field identifying a different format with different data types. The PDP context modification procedure is followed as illustrated in Figure 20 Thus the new data format is included in the PDP context modification activation request and passed to the SGSN. The flow diagram shown in Figure 20 is summarised as follows:
S14: The UE sends a PDP context modification request to the SGSN 306. The context modification request includes a data field which provides a data value identifying a different one of the frame type formats according to a different rate of the AMR-codec. This data field is provided for up-link communications, which is from the UE to the core network part CN. A corresponding field may be provided to specify the data format of the frame to be use for the down-link communication from the core network to the UE.
S16: The SGSN 306 signals to the GGSN to create a PDP context request to establish, within the core network, a virtual communications channel for communicating the packet data including the data frames having different types of data.
S18: The GGSN responds to the PDP context modification request with the established PDP address.
S20: The SGSN 306 establishes a Radio Access Bearer for carrying the data packets from the UE to the core network and/or from the core network to the UE. The data packets are provided with a Radio Access Sub-flow Indicator in accordance with the format of the data being communicated.
S22: The RNC 314 (BSS/UTRAN) establishes a sub-flow bearer having different Quality of Service parameters for each of the data types of the new data frame carried in the IP data packets.
S24: The SGSN communicates a PDP context modification message to the UE, indicating that the PDP context modification has been accepted.

In alternative embodiments, a different signalling protocol is employed to communicate a change in the data format to the SGSN. In a further alternative example, an extra out-of band signalling is defined between UE and SGSN to inform the SGSN of the change. This out of band format may be provided in a new packet type referred to as Iu_cn: (data Format).

A third option is to provide a new interface between a Proxy Call State Control Function (P-CSCF) and the SGSN for passing the data format information from P-CSCF to SGSN. Such an arrangement is illustrated in Figure 19, which corresponds to the schematic block diagram shown in Figure 5b. As illustrated in Figure 19 a Session Initiation Protocol (SIP) message 902 is sent to a P-CSCF indicating that a change of the data format is required. The P-CSCF 900 communicates the change of data format to the GGSN 300, which communicates the change to the SGSN 306. The P-CSCF communicates the change via the new interface 904 labelled Go+, which provides the new data Format. It is noted that the P-CSCF (Proxy Call State Control Function) is the first control entity to receive a VoIP/IMS request from the UE and it is the last control entity to authorise the session.

As will be appreciated a separate definition of data Format Information Parameters is provided for up-link and down-link for use with a case when asymmetric AMR for VoIP/IMS sessions are required.

Various further aspects and features of the present invention are defined in the appended claims. Various modifications can be made to the embodiments herein described without departing from the scope of the present invention.

### References

[1] R. Steele, C-C Lee and P.Gould, "GSM, cdmaOne and 3G Systems," published by Wiley International ISBN 0 471 491853
[2] 3GPP TS 26.202 V5.1.0 (2002-09)
[3] 3GPP TS 23.107
[4] 3GPP TS 26.201 V1.1.0 (2000-12)
[5] 3GPP TS 24.008

## Claims

1. A packet radio network for communicating internet packet data to and/or from a mobile user equipment (316), payload data (834) of each of the internet data packets containing a plurality of different types of data (862), the packet radio network having a core network part and a radio network part, the core network including a gateway support node (300) operable to provide an interface for communicating the data packets between the packet radio network and an external packet data network (302), a serving support node (306) operable to control communication of the data packets between the gateway support node (300) and the user mobile equipment (316) via the radio network part, the radio network part providing radio access bearers for communicating the data packets to and/or from the mobile user equipment, wherein the core network is operable in response to a Packet Data Protocol context activation request from the mobile user equipment (316) to establish a communications channel for communicating the internet data packets containing the different types of data to and/or from the user equipment (316) via the packet radio network, the Packet Data Protocol context activation request data including at least one of a field specifying one of a plurality of data formats for communicating the internet data packets from the user equipment (316) via the core network, and a field specifying one of a plurality of data formats for communicating the internet data packets to the user equipment via the core network, the internet packet data formats specifying an amount of data in each of the different data types of the payload, the communications channel established by the core network, including a bearer for communicating the internet packet data established for the communications channel between the gateway support node (300) and a radio network controller (314) via the serving support node (306), and for each of the different data types a radio access bearer having a different set of quality of service parameters for communicating the data packet to and/or from the mobile user equipment (316), and the radio network part includes the radio network controller (314), and the serving support node (306) is operable to generate a Radio Access Bearer Sub-flow Combination Indicator providing an indication of the number of different types of data in the payload and the number of symbols in each different data type, the sub-flow indicator being generated in accordance with the field specifying the data format for communicating the data packets in the Packet Data Protocol context activation request for the communications channel, to form a transport frame for each internet data packet by combining the payload data (834) and the header (832) of each internet data packet with the sub-flow indicator (830), the transport frame being used to communicate each internet data packet via the bearer established for the communications channel between the gateway support node (300) and the radio network controller (314) via the serving support node (306), the data packets being communicated between the radio network controller and the user equipment by detecting the sub-flow indicator (830), and in accordance with the sub-flow indicator (830) arranging for the data from each of the different data fields to be communicated via a different one of the radio access bearer providing different quality of service parameters appropriate for the different data type.

2. A packet radio network as claimed in Claim 1, wherein the serving support node (306) is operable to form the transport frame by generating a service data unit from the payload data and an internet protocol header from each data packet, and combining the service data unit with the sub-flow indicator.

3. A packet radio network as claimed in Claim 2, wherein the mobile user equipment (316) and the radio network controller each include a packet data protocol layer which is operable to remove the internet protocol header from the service data unit before communication, and to add the internet protocol header to the service data unit after communication of the payload data via each of the sub-flow radio access bearers.

4. A packet radio network as claimed in Claim 1, wherein the radio network part includes a radio network controller (314), and the serving support node (306) is operable to establish the communications channel by communicating radio access Packet Data Protocol context activation request data in accordance with a radio access network application part protocol to the radio network controller, the radio network controller (312) being operable in combination with a radio resource control layer to establish using a medium access control layer the radio access bearer for each of the plurality of quality of service parameters for one of the different data types.

5. A packet radio network as claimed in Claim 4, wherein the radio resource control layer is operable to establish a radio access bearer for each of the different data types in accordance with the quality of service parameters in the medium access control layer, and to establish the sub-flows in the radio access bearer for each of the different data types within the radio access bearer in the medium access control layer.

6. A packet radio network as claimed in any preceding Claim, wherein for at least one of the data formats for communicating the data packets from the mobile user equipment (316) or to the mobile user equipment (316), the serving support node is operable to change the data format for communicating the packet data to a different one of the plurality of data formats, the different data format specifying a different amount of data in each of the different data types.

7. A packet radio network as claimed in Claim 6, wherein the mobile user equipment (316) is operable to change the data format for communicating the packet data to a different one of the plurality of data formats, by sending a Packet Data Protocol context modification request to the serving support node, the Packet Data Protocol context modification request specifying the different one of the plurality of data formats.

8. A packet radio network as claimed in Claim 6, wherein the user equipment (316) is operable to communicate the change in the data format as an out-of band signal as a modification packet.

9. A packet radio network as claimed in Claim 6, wherein the user equipment (316) is operable to communicate the change in the data format by sending a Session Initiation Protocol (SIP) message to a Proxy-Call State Control Function (PCSCF) indicating that a change in the data format is required, the P-CSCF being operable to communicate the change of data format to the gateway support node (300), which communicates the change to the serving gateway support node (300).

10. A packet radio network as claimed in any preceding Claim, wherein the payload data of the internet data packet includes a frame of data formed from an adaptive multi-rate speech coded, the data frame providing the plurality of the different types of data.

11. A packet radio network as claimed in Claim 6 in combination with Claim 10, wherein the change of the data format is provided in accordance with a change in the rate of the adaptive multi-rate speech coded.

12. A packet radio network as claimed in any preceding Claim, wherein the network is operable as a General Packet Radio Service (GPRS) network, the gateway support node (300) being a gateway GPRS support node, and the serving support node (306) is a serving GPRS support node.

13. A packet radio network as claimed in any preceding Claim, wherein the radio network controller (314) is operable to compress the header of the internet protocol packet for communication via one of the radio access bearers.

14. A method for communicating internet packet data to and/or from a mobile user equipment (316) via a packet radio network, payload data (834) of each of the internet data packets containing a plurality of different types of data, the packet radio network having a core network part and a radio network part, the method comprising communicating the internet data packets between the packet radio network and an external packet data network (302), controlling communication of the internet data packets between the gateway support node (300) and the user mobile equipment (316) via the radio network part, the radio network part providing radio access bearers for communicating the internet data packets to and/or from the user equipment (316), communicating a Packet Data Protocol context activation request to the core network part for a communications channel for communicating the internet data packets containing the different types of data to and/or from the mobile user equipment (316) via the packet radio network, the request data including at least one of a field specifying one of a plurality of data formats for communicating the data packets from the mobile user equipment (316) to the core network, and a field specifying one of a plurality of data formats for communicating the internet data packets to the mobile user equipment (316) from the core network, the packet data formats specifying an amount of data in each of the different data types, and providing in response to the Packet Data Protocol context modification request to establish the communications channel, a bearer for communicating the internet packet data across the core network, and for each of the different data types a radio access bearer having a different set of quality of service parameters for communicating the internet data packet from and/or to the mobile user equipment (316), wherein the radio network part includes a radio network controller (314), the method comprising generating a radio access bearer sub-flow indicator (830) providing an indication of the number of different types of data in the payload and the number of symbols in each different data type, the sub-flow indicator (830) being generated in accordance with the field specifying the data format for communicating the data packets to and/or from the user equipment in the request data, forming a transport frame (lu-ps) for each internet data packet by combining the payload data and the header of each internet data packet with the sub-flow indicator (830), the transport frame being used to communicate each data packet via the bearer established for the communications channel between the gateway support node (300) and the radio network controller (314) via the serving support node (306), the data packets being communicated from the radio network controller (314) to the mobile user equipment (316) by detecting the sub-flow indicator, and in accordance with the sub-flow indicator arranging for the data from each of the different data fields to be communicated via a different radio access bearer providing different quality of service parameters appropriate for the different data type.

15. A method as claimed in Claim 14, wherein the forming the transport frame comprises generating a service data unit from the payload data and an internet protocol header from each internet data packet, and combining the service data unit with the sub-flow indicator.

16. A method as claimed in Claim 14 or 15, wherein the radio network part includes a radio network controller (314), the method comprising establishing the communications channel by communicating radio access request data in accordance with a radio access network application part (RANAP) protocol to the radio network controller, and
establishing using a medium access control layer the radio access bearer for each of the plurality of quality of service parameters for one of the different data types.

17. A method as claimed in any of Claims 14, 15 or 16, the method comprising changing the data format for communicating the internet packet data to a different one of the plurality of data formats, the different data format specifying a different amount of data in each of the different data types.

18. A method as claimed in Claim 17, wherein the changing the data format comprises sending a Packet Data Protocol context modification request, the modification request specifying the different one of the plurality of data formats.

19. A method as claimed in Claim 17, wherein the changing the data format comprises communicating an out-of band signal as a modification packet.

20. A method as claimed in Claim 17, wherein the changing the data format comprises sending a Session Initiation Protocol (SIP) message to a Proxy-Call State Control Function (P-CSCF) indicating that a change in the data format is required, communicate the change of data format from the P-CSCF to the gateway support node, and communicating the change to the serving gateway support node (300).

21. A method as claimed in any of Claims 14 to 20, wherein the payload data of the internet packet data includes a frame of data formed from an adaptive multi-rate speech coded, the data frame providing the plurality of the different types of data.

22. A method as claimed in Claim 17 in combination with Claim 21, wherein the changing of the data format comprises changing the data format in accordance with a change in the rate of the adaptive multi-rate speech coded.

23. A method as claimed in any claims 14 to 22, comprising compressing the header of the internet protocol packet in the radio network controller for communications via one of the radio access bearers.

24. A mobile user equipment (316) adapted to communicate internet data packets with a correspondent terminal (352) at an internal protocol layer via a packet radio network according to any one of Claims 1 to 15, the mobile user equipment comprising a terminating equipment and a mobile terminal, the terminating equipment being operable to generate the internet data packets having an internet protocol header (832), payload data of each internet data packet having a plurality of different types of data, in accordance with one of a plurality of data formats, the mobile terminal being operable to determine one of the data formats which can be supported, by the packet radio network, to communicate a Packet Data Protocol context activation request for a communications channel for communicating the internet data packets containing the different types of data via a packet radio network, the request data including at least one of a field specifying the data format of the plurality of different types of data to be communicated from the user equipment via the packet radio network, and a field specifying the data format of the plurality of different data types to be communicated to the user equipment via the packet radio network, the data formats specifying an amount of data in each of the different data types in the internet data packets.

25. A user equipment as claimed in Claim 24, wherein the data format is indicated to the terminal equipment, the terminal equipment being operable to generate the internet data packets in accordance with the data format which can be supported.

## Patentansprüche

1. Paketfunknetzwerk zur Übermittlung von Internetpaketdaten zu und/oder aus einer mobilen Benutzereinrichtung (316), wobei Nutzdaten (834) jedes der Internetdatenpakete mehrere unterschiedliche Datentypen (862) enthalten, wobei das Paketfunknetzwerk einen Kernnetzwerkteil und einen Funknetzwerkteil aufweist, wobei das Kernnetzwerk einen Zugangsunterstützungsknoten (300), der ausgebildet ist, eine Schnittstelle zum Austausch der Datenpakete zwischen dem Paketfunknetzwerk und einem externen Paketdatennetzwerk (302) bereitzustellen, und einen Dienstunterstützungsknoten (306) aufweist, der ausgebildet ist, den Austausch der Datenpakete zwischen dem Zugangsunterstützungsknoten (300) und der mobilen Benutzereinrichtung (316) über den Funknetzwerkteil zu steuern, wobei der Funknetzwerkteil Funkzugriffsträger zur Übermittlung der Datenpakete zu und/oder aus der mobilen Benutzereinrichtung bereitstellt, wobei das Kernnetzwerk in Reaktion auf eine Paketdatenprotokoll-Kontextaktivierungsanforderung aus der mobilen Benutzereinrichtung (316) einen Kommunikationskanal zur Übermittlung der Internetdatenpakete mit den unterschiedlichen Datentypen zu und/oder aus der Benutzereinrichtung (316) über das Paketfunknetzwerk einrichtet, wobei die Paketdatenprotokoll-Kontextaktivierungsanforderung Daten enthält mit einem Feld, das eines von mehreren Datenformaten zur Übermittlung der Internetdatenpakete von der Benutzereinrichtung (316) über das Kernnetzwerk und/oder einem Feld, das eines von mehreren Datenformaten zur Übermittlung der Internetdatenpakete zu der Benutzereinrichtung über das Kernnetzwerk enthält, wobei die Internetpaketdatenformate eine Datenmenge in jedem der unterschiedlichen Datentypen der Nutzdaten angeben, der Kommunikationskanal, der durch das Kernnetzwerk eingerichtet wird, einen Träger zur Übermittlung der Internetpaketdaten enthält, die für den Kommunikationskanal zwischen dem Zugangsunterstützungsknoten (300) und einer Funknetzwerksteuerung (314) über den Dienstunterstützungsknoten (306) erstellt werden, und für jeden der unterschiedlichen Datentypen einen Funkzugangsträger aufweist, der eine unterschiedliche Gruppe aus Qualität-an-Dienst-Parametern zur Übermittlung des Datenpakets zu und/oder aus der mobilen Benutzereinrichtung (316) hat, und wobei der Funknetzwerkteil die Funknetzwerksteuerung (314) enthält, und wobei der Dienstunterstützungsknoten (306) ausgebildet ist, einen Funkzugriffsträger-Sub-Stromkombinations-Indikator zu erzeugen, der eine Angabe der Anzahl an unterschiedlichen Datentypen in den Nutzdaten und der Anzahl an Symbolen in jedem unterschiedlichen Datentyp bereitstellt, wobei der Sub-Stromindikator entsprechend dem Feld erzeugt wird, das das Datenformat zur Übermittlung der Datenpakete in der Paketdatenprotokoll-Kontextaktivierungsanforderung für den Kommunikationskanal angibt, um einen Transportblock für jedes Internetdatenpaket zu bilden, indem die Nutzdaten (834) und der Kopfbereich (832) jedes Internetdatenpakets mit dem Sub-Stromindikator (830) kombiniert werden, wobei der Transportblock verwendet wird, um jedes Internetdatenpaket über den Träger, der für den Kommunikationskanal zwischen dem Zugangsunterstützungsknoten (300) und der Funknetzwerksteuerung (314) eingerichtet ist, über den Dienstunterstützungsknoten (306) zu übermitteln, wobei die Datenpakete zwischen der Funknetzwerksteuerung und der Benutzereinrichtung ausgetauscht werden, indem der Sub-Stromindikator (830) erfasst wird, und in Entsprechung mit dem Sub-Stromindikator (830) die Daten aus jedem der unterschiedlichen Datenfelder so angeordnet werden, dass sie über einen anderen der Funkzugangsträger übermittelt werden, der eine unterschiedliche Qualität-an-Dienst-Parametern bereitstellt, die für den anderen Datentyp geeignet sind.

2. Paketfunknetzwerk nach Anspruch 1, wobei der Dienstunterstützungsknoten (306) ausgebildet ist, den Transportblock zu bilden, indem die Dienstdateneinheit aus den Nutzdaten und ein Internetprotokollkopfbereich aus jedem Datenpaket erzeugt werden und die Dienstdateneinheit mit dem Sub-Stromindikator kombiniert wird.

3. Paketfunknetzwerk nach Anspruch 2, wobei die mobile Benutzereinrichtung (316) und die Funknetzwerksteuerung jeweils eine Paketdatenprotokollschicht aufweisen, die geeignet ist, den Internetprotokollkopfbereich aus der Dienstdateneinheit vor der Übermittlung zu entfernen und den Internetprotokollkopfbereich der Dienstdateneinheit nach der Übermittlung der Nutzdaten über jeden der Sub-Stromfunkzugriffsträger hinzuzufügen.

4. Paketfunknetzwerk nach Anspruch 1, wobei der Funknetzwerkteil eine Funknetzwerksteuerung (314) enthält und der Dienstunterstützungsknoten (306) ausgebildet ist, den Kommunikationskanal durch Übermittlung von Funkzugriffs-Paketdatenprotokoll-Kontextaktivierungsanforderungsdaten gemäß einem Funkzugriffsnetzwerkanwendungsteilprotokoll der Funknetzwerksteuerung zu übermitteln, wobei die Funknetzwerksteuerung (312) in Verbindung mit einer Funkressourcensteuerschicht ausgebildet ist, unter Anwendung einer Mediumzugriffssteuerschicht den Funkzugriffsträger für jeden der mehreren Qualität-an-Dienst-Parametern für einen der unterschiedlichen Datentypen zu erstellen.

5. Paketfunknetzwerk nach Anspruch 4, wobei die Funkressourcensteuerschicht ausgebildet ist, einen Funkzugriffsträger für jeden der unterschiedlichen Datentypen gemäß den Qualität-an-Dienst-Parametern in der Mediumzugriffssteuerschicht zu erstellen und die Sub-Ströme in dem Funkzugriffsträger für jeden der unterschiedlichen Datentypen innerhalb des Funkzugriffsträgers in der Mediumzugriffssteuerschicht zu erstellen.

6. Paketfunknetzwerk nach einem der vorhergehenden Ansprüche, wobei für mindestens eines der Datenformate zur Übermittlung der Datenpakete aus der mobilen Benutzereinrichtung (316) oder zu der mobilen Benutzereinrichtung (316) der Dienstunterstützungsknoten ausgebildet ist, das Datenformat zur Übermittlung des Datenpakets in ein anderes der mehreren Datenformate zu ändern, wobei das andere Datenformat eine andere Datenmenge in jedem der unterschiedlichen Datentypen angibt.

7. Paketfunknetzwerk nach Anspruch 6, wobei die mobile Benutzereinrichtung (316) ausgebildet ist, das Datenformat für die Übermittlung des Datenpakets in ein anderes der mehreren Datenformate zu ändern, indem eine Paketdatenprotokoll-Kontextmodifizierungsanforderung zu dem Dienstunterstützungsknoten gesendet wird, wobei die Paketdatenprotokoll-Kontextmodifizierungsanforderung das andere der mehreren Datenformate angibt.

8. Paketfunknetzwerk nach Anspruch 6, wobei die Benutzereinrichtung (316) ausgebildet ist, die Änderung des Datenformats als ein bandexternes Signal als Modifizierungspaket zu übermitteln.

9. Paketfunknetzwerk nach Anspruch 6, wobei die Benutzereinrichtung (316) ausgebildet ist, die Änderung des Datenformats zu übermitteln, indem eine Sitzungsinitiierungsprotokoll-(SIP-) Nachricht zu einer Proxy-Rufzustandssteuerfunktion (P-CSCF) gesendet wird, die angibt, dass eine Änderung des Datenformats angefordert ist, wobei die P-CSCF in der Lage ist, die Änderung des Datenformats an den Zugangsunterstützungsknoten (300) zu übermitteln, der die Änderung an den dienstleistenden Zugangsunterstützungsknoten (300) übermittelt.

10. Paketfunknetzwerk nach einem der vorhergehenden Ansprüche, wobei die Nutzdaten des Internetdatenpakets einen Block aus Daten enthalten, der aus einem adaptiven Sprachcode mit mehreren Raten erzeugt ist, wobei der Datenblock mehrere der unterschiedlichen Datentypen bereitstellt.

11. Paketfunknetzwerk nach Anspruch 6 in Verbindung mit Anspruch 10, wobei die Änderung des Datenformats entsprechend einer Änderung der Rate des adaptiven Sprachcodes mit mehreren Raten bereitgestellt wird.

12. Paketfunknetzwerk nach einem der vorhergehenden Ansprüche, wobei das Netzwerk als ein allgemeines Paketfunkdienst- (GPRS-) Netzwerk betreibbar ist, wobei der Zugangsunterstützungsknoten (300) ein Zugangs-GPRS-Unterstützungsknoten ist und der Dienstunterstützungsknoten (306) ein dienstleistender GPRS-Unterstützungsknoten ist.

13. Paketfunknetzwerk nach einem der vorhergehenden Ansprüche, wobei die Funknetzwerksteuerung (314) ausgebildet ist, den Kopfbereich des Internetprotokollpakets für die Übermittlung über einen der Funkzugriffsträger zu komprimieren.

14. Verfahren zur Übermittlung von Internetpaketdaten zu und/oder aus einer mobilen Benutzereinrichtung (316) über ein Paketfunknetzwerk, wobei Nutzdaten (834) jedes der Internetdatenpakete mehrere unterschiedliche Datentypen enthalten, wobei das Paketfunknetzwerk einen Kernnetzwerkteil und einen Funknetzwerkteil hat, wobei das Verfahren umfasst: Übermitteln der Internetdatenpakete zwischen dem Paketnetzwerk und einem externen Paketdatennetzwerk (302), Steuern der Übermittlung der Internetdatenpakete zwischen dem Zugangsunterstützungsknoten (300) und der mobilen Benutzereinrichtung (316) über den Funknetzwerkteil, wobei der Funknetzwerkteil Funkzugriffsträger zur Übermittlung der Internetdatenpakete zu und/oder aus der Benutzereinrichtung (316) bereitstellt, Übermitteln einer Paketdatenprotokoll-Kontextaktivierungsanforderung an den Kernnetzwerkteil für einen Kommunikationskanal zur Übermittlung der Internetdatenpakete, die die unterschiedlichen Datentypen enthalten, zu und/oder aus der mobilen Benutzereinrichtung (316) über das Paketfunknetzwerk, wobei die Anforderungsdaten ein Feld enthalten, das eines von mehreren Datenformaten für die Übermittlung der Datenpakete von der mobilen Benutzereinrichtung (316) zu dem Kernnetzwerk angibt, und/oder ein Feld, das eines von mehreren Datenformaten für die Übermittlung der Internetdatenpakete an die mobile Benutzereinrichtung (316) aus dem Kernnetzwerk angibt, wobei die Paketdatenformate eine Datenmenge in jedem der unterschiedlichen Datentypen angeben, und Bereitstellen, in Reaktion auf die Paketdatenprotokoll-Kontextmodifizierungsanforderung zur Einrichtung des Kommunikationskanals eines Trägers zur Übermittlung der Internetpaketdaten über das Kernnetzwerk und für jeden der unterschiedlichen Datentypen, eines Funkzugriffsträgers mit einem anderen Satz an Qualität-an-Dienst-Parametern für die Übermittlung des Internetdatenpakets aus und/oder zu der mobilen Benutzereinrichtung (316), wobei der Funknetzwerkteil eine Funknetzwerksteuerung (314) aufweist, wobei das Verfahren umfasst: Erzeugen eines Funkzugriffsträger-Sub-Stromindikators (830), der eine Angabe über die Anzahl der unterschiedlichen Datentypen in den Nutzdaten und der Anzahl an Symbolen in jedem unterschiedlichen Datentyp angibt, wobei der Sub-Stromindikator (830) entsprechend mit dem Feld erzeugt wird, das das Datenformat für die Übermittlung der Datenpakete zu und/oder aus der Benutzereinrichtung in den Anforderungsdaten spezifiziert, Bilden eines Transportblocks (lu-ps) für jedes Internetdatenpaket durch Kombinieren der Nutzdaten und des Kopfbereichs jedes Internetdatenpakets mit dem Sub-Stromindikator (830), wobei der Transportblock verwendet wird, um jedes Datenpaket über den Träger, der für den Kommunikationskanal zwischen dem Zugangsunterstützungsknoten (300) und der Funknetzwerksteuerung (314) eingerichtet ist, über den dienstleistenden Unterstützungsknoten (306) zu übermitteln, wobei die Datenpakete von der Funknetzwerksteuerung (314) an die mobile Benutzereinrichtung (316) übermittelt werden, indem der Sub-Stromindikator erfasst wird, und in Übereinstimmung mit dem Sub-Stromindikator, Ausführen einer Steuerung derart, dass die Daten aus jedem der unterschiedlichen Datenfelder über einen anderen Funkzugriffsträger, der unterschiedliche Qualität-an-Dienst-Parameter bereitstellt, die für den unterschiedlichen Datentyp geeignet sind, übermittelt werden.

15. Verfahren nach Anspruch 14, wobei das Bilden des Transportblocks umfasst: Erzeugen einer Dienstdateneinheit aus den Nutzdaten und eines Internetprotokollkopfbereichs aus jedem Internetdatenpaket, und Kombinieren der Dienstdateneinheit mit dem Sub-Stromindikator.

16. Verfahren nach Anspruch 14 oder 15, wobei der Funknetzwerkteil eine Funknetzwerksteuerung (314) aufweist, wobei das Verfahren umfasst: Einrichten des Kommunikationskanals durch Übermittlung von Funkzugriffsanforderungsdaten entsprechend einem Funkzugriffsnetzwerk-Anwendungsteil- (RANAP-) Protokoll an die Funknetzwerksteuerung, und Einrichten unter Anwendung einer Mediumzugriffssteuerschicht des Funkzugriffsträgers für jeden der mehreren Qualität-an-Dienst-Parametern für einen der unterschiedlichen Datentypen.

17. Verfahren nach einem der Ansprüche 14, 15 oder 16, wobei das Verfahren umfasst: Ändern des Datenformats für die Übermittlung der Internetpaketdaten in ein anderes der mehreren Datenformate, wobei das andere Datenformat eine andere Datenmenge in jedem der unterschiedlichen Datentypen angibt.

18. Verfahren nach Anspruch 17, wobei die Änderung des Datenformats umfasst: Senden einer Paketdatenprotokoll-Kontextmodifizierungsanforderung, wobei die Modifizierungsanforderung das andere der mehreren Datenformate angibt.

19. Verfahren nach Anspruch 17, wobei das Ändern des Datenformats umfasst: Übermitteln eines bandexternen Signals als ein Modifizierungspaket.

20. Verfahren nach Anspruch 17, wobei das Ändern des Datenformats umfasst: Senden einer Sitzungsinitiierungsprotokoll- (SIP-) Nachricht an eine Proxy-Rufzustandssteuerfunktion (P-CSCF), die angibt, dass eine Änderung des Datenformats angefordert ist, Übermitteln der Änderung des Datenformats aus der P-CSCF an den Zugangsunterstützungsknoten und Übermitteln der Änderung an den dienstleistenden Zugangsunterstützungsknoten (300).

21. Verfahren nach einem der Ansprüche 14 bis 20, wobei die Nutzdaten der Internetpaketdaten einen Datenblock enthalten, der aus einem adaptiven Sprachcode mit mehreren Raten erzeugt ist, wobei der Datenblock die mehreren der unterschiedlichen Datentypen bereitstellt.

22. Verfahren nach Anspruch 17 in Verbindung mit Anspruch 21, wobei die Änderung des Datenformats umfasst: Ändern des Datenformats entsprechend einer Änderung der Rate des adaptiven Sprachcodes mit mehreren Raten.

23. Verfahren nach einem der Ansprüche 14 bis 22, das umfasst: Komprimieren des Kopfbereichs des Internetprotokollpakets in der Funknetzwerksteuerung für die Übermittlung über einen der Funkzugriffsträger.

24. Mobile Benutzereinrichtung (316), die ausgebildet ist, Internetdatenpakete mit einem zugeordneten Endgerät (352) in einer Internetprotokollschicht über ein Paketfunknetzwerk gemäß einem der Ansprüche 1 bis 15 auszutauschen, wobei die mobile Benutzereinrichtung umfasst: eine Endgeräteinrichtung und ein Mobilendgerät, wobei die Endgeräteinrichtung ausgebildet ist, die Internetdatenpakete mit einem Internetprotokollkopfbereich (832) gemäß einem von mehreren Datenformaten zu erzeugen, wobei Nutzdaten jedes Internetdatenpakets mehrere unterschiedliche Datentypen aufweisen, wobei das Mobilendgerät ausgebildet ist, eines der Datenformate zu ermitteln, die von dem Paketfunknetzwerk unterstützt werden können, um eine Paketdatenprotokoll-Kontextaktivierungsanforderung für einen Kommunikationskanal zur Übermittlung der Internetdatenpakete, die die unterschiedlichen Datentypen enthalten, über ein Paketfunknetzwerk zu übermitteln, wobei die Anforderungsdaten ein Feld, das das Datenformat der mehreren unterschiedlichen Datentypen, die von der Benutzereinrichtung über das Paketfunknetzwerk zu übermitteln sind, angibt, und/oder ein Feld enthält, das das Datenformat der mehreren unterschiedlichen Datentypen angibt, die an die Benutzereinrichtung über das Paketfunknetzwerk zu übermitteln sind, wobei die Datenformate eine Datenmenge in jedem der unterschiedlichen Datentypen in den Internetdatenpaketen angeben.

25. Benutzereinrichtung nach Anspruch 24, wobei das Datenformat der Endgeräteinrichtung angegeben wird, wobei die Endgeräteinrichtung ausgebildet ist, die Internetdatenpakete entsprechend zu dem Datenformat, das unterstützt werden kann, zu erzeugen.

## Revendications

1. Réseau de radiocommunication par paquets pour assurer la communication de données de paquets Internet vers et/ou depuis un équipement utilisateur mobile (316), les données de charge utile (834) de chacun des paquets de données Internet contenant une pluralité de différents types de données (862), le réseau de radiocommunication par paquets comportant une partie réseau central et une partie réseau radio, le réseau central comprenant un noeud de support de passerelle (300) opérationnel pour fournir une interface pour assurer la communication des paquets de données entre le réseau de radiocommunication par paquets et un réseau de données par paquets externe (302), un noeud de support de service (306) pouvant fonctionner pour commander la communication des paquets de données entre le noeud de support de passerelle (300) et l'équipement utilisateur mobile (316) par l'intermédiaire de la partie réseau radio, la partie réseau radio fournissant des porteurs d'accès radio pour assurer la communication des paquets de données vers et/ou depuis l'équipement utilisateur mobile, dans lequel le réseau central peut être actionné en réponse à une demande d'activation de contexte de protocole de données par paquets depuis l'équipement utilisateur mobile (316) pour établir un canal de communication pour assurer la communication des paquets de données Internet contenant les différents types de données à destination et/ou en provenance de l'équipement utilisateur (316) par l'intermédiaire du réseau de radiocommunication par paquets, les données de demande d'activation de contexte de protocole de données par paquets comprenant au moins l'un d'un champ spécifiant l'un d'une pluralité de formats de données pour assurer la communication des paquets de données Internet à partir de l'équipement utilisateur (316) par l'intermédiaire du réseau central, et d'un champ spécifiant l'un d'une pluralité de formats de données pour assurer la communication des paquets de données Internet à l'équipement utilisateur par l'intermédiaire du réseau central, les formats de données de paquets Internet spécifiant une quantité de données dans chacun des différents types de données de la charge utile, le canal de communications établi par le réseau central, comprenant un porteur destiné à communiquer les données de paquets Internet établies pour le canal de communication entre le noeud de support de passerelle (300) et un contrôleur de réseau radio (314) par l'intermédiaire du noeud de support de service (306), et pour chacun des différents types de données d'un porteur d'accès radio ayant un autre ensemble de paramètres de qualité de service pour assurer la communication du paquet de données vers et/ou depuis l'équipement utilisateur mobile (316), et la partie réseau radio comprend le contrôleur de réseau radio (314), et le noeud de support de service (306) est opérationnel pour générer un indicateur de combinaison de sous-flux de porteur d'accès radio fournissant une indication du nombre de types différents de données dans la charge utile et le nombre de symboles dans chaque type de données différent, l'indicateur de sous-flux étant généré en fonction du champ spécifiant le format de données pour assurer la communication des paquets de données dans la demande d'activation de contexte de protocole de données par paquets pour le canal de communication, pour former une trame de transport pour chaque paquet de données Internet en combinant les données de charge utile (834) et l'en- tête (832) de chaque paquet de données Internet avec l'indicateur de sous-flux (830), la trame de transport servant à assurer la communication de chaque paquet de données Internet par l'intermédiaire du porteur Internet établies pour le canal de communication entre le noeud de support de passerelle (300) et le contrôleur de réseau radio (314) par l'intermédiaire du noeud de support de service (306), les paquets de données étant transmis entre le contrôleur de réseau radio et l'équipement utilisateur en détectant l'indicateur de sous-flux (830), et conformément à l'indicateur de sous-flux (830) faire en sorte que les données provenant de chacun des différents champs de données puissent communiquer par l'intermédiaire d'un porteur différent du porteur d'accès radio fournissant différents paramètres de qualité de service appropriés au type de données différent.

2. Réseau radio par paquets selon la revendication 1, dans lequel le noeud de support de desserte (306) est opérationnel pour former la trame de transport en générant une unité de données de service à partir de la charge utile des données et un en-tête de protocole Internet à partir de chaque paquet de données, et combiner l'unité de données de service avec l'indicateur de sous-flux.

3. Réseau radio par paquets selon la revendication 2, dans lequel l'équipement utilisateur mobile (316) et le contrôleur de réseau radio comprennent chacun une couche de protocole de données par paquets qui est opérationnelle pour supprimer l'en-tête de protocole Internet de l'unité de données de service avant la communication et ajouter l'en-tête de protocole Internet à l'unité de données de service après la communication des données de charge utile par l'intermédiaire de chacun des porteurs d'accès radio de sous-flux.

4. Réseau de radiocommunication par paquets selon la revendication 1, dans lequel la partie réseau radio comprend un contrôleur de réseau radio (314), et le noeud de support de service (306) est opérationnel pour établir le canal de communication en communiquant, au contrôleur de réseau radio, les données de demande d'activation de contexte de protocole de données par paquets d'accès radio conformément au protocole de la partie application du réseau d'accès radio, le contrôleur de réseau radio (312) étant opérationnel en combinaison avec une couche de contrôle des ressources radio pour établir, en utilisant une couche de contrôle d'accès au support, le porteur d'accès radio pour chacun de la pluralité de paramètres de qualité de service pour l'un des différents types de données.

5. Réseau radio par paquets selon la revendication 4, dans lequel la couche de contrôle de ressources radio est opérationnelle pour établir un port d'accès radio pour chacun des différents types de données conformément aux paramètres de qualité de service dans la couche de contrôle d'accès au support, et pour établir les sous-flux dans le porteur d'accès radio pour chacun des différents types de données dans le porteur d'accès radio dans la couche de contrôle d'accès au support.

6. Réseau de radiocommunication par paquets selon l'une quelconque des revendications précédentes, dans lequel au moins l'un des formats de données pour assurer la communication des paquets de données depuis l'équipement utilisateur mobile (316) ou vers l'équipement utilisateur mobile (316), le noeud de support de service est opérationnel pour changer le format de données pour assurer la communication des données par paquets à un format différent de la pluralité de formats de données, le format de données différent spécifiant une quantité de données différente dans chacun des différents types de données.

7. Réseau de radiocommunication par paquets selon la revendication 6, dans lequel l'équipement utilisateur mobile (316) est opérationnel pour changer le format de données pour assurer la communication les données par paquets avec un autre format de la pluralité de formats de données, en envoyant une demande de modification de contexte de protocole de données par paquets demande au noeud de support de service, la demande de modification de contexte de protocole de données par paquets spécifiant le format différent parmi la pluralité de formats de données.

8. Réseau de radiocommunication par paquets selon la revendication 6, dans lequel l'équipement utilisateur (316) est opérationnel pour assurer la communication du format de données comme signal hors bande et comme paquet de modification.

9. Réseau de radiocommunication par paquets selon la revendication 6, dans lequel l'équipement utilisateur (316) est opérationnel pour communiquer la modification du format de données en envoyant un message de protocole d'initiation de session (SIP) à une fonction de contrôle d'état d'appel par procuration (PCSCF) indiquant qu'un changement du format de données est requis, la fonction P-CSCF étant opérationnelle pour communiquer la modification de format de données au noeud de support de passerelle (300), qui communique la modification au noeud de support de passerelle de service (300).

10. Réseau radio par paquets selon l'une quelconque des revendications précédentes, dans lequel les données de charge utile du paquet de données Internet comprennent une trame de données formée à partir d'un codage vocal adaptatif multi-débit, la trame de données fournissant la pluralité des différents types de données.

11. Réseau radio par paquets selon la revendication 6 en combinaison avec la revendication 10, dans lequel la modification du format de données est réalisée conformément à une modification du débit du codage vocal adaptatif multi-débit.

12. Réseau radio par paquets selon l'une quelconque des revendications précédentes, dans lequel le réseau est opérationnel comme réseau de norme GPRS (service général de radiocommunication par paquets), le noeud de support de la passerelle (300) étant un noeud de support GPRS de passerelle, et le noeud de support de service (306) est noeud de support GPRS de service.

13. Réseau radio par paquets selon l'une quelconque des revendications précédentes, dans lequel le contrôleur de réseau radio (314) est opérationnel pour compresser l'en-tête du paquet de protocole Internet pour assurer la communication par l'intermédiaire de l'un des porteurs d'accès radio.

14. Procédé de communication de données de paquets Internet vers et/ou depuis un équipement utilisateur mobile (316) par l'intermédiaire d'un réseau de radio par paquets, de données de charge utile (834) de chacun des paquets de données Internet contenant une pluralité de différents types de données, le réseau de radiocommunication par paquets possédant une partie réseau central et une partie réseau radio, le procédé consistant à assurer la communication des paquets de données Internet entre le réseau de radiocommunication par paquets et un réseau de données par paquets externe (302), à commander la communication des paquets de données entre le noeud de support de passerelle (300) et l'équipement utilisateur mobile (316) par l'intermédiaire de la partie réseau radio, la partie réseau radio fournissant des porteurs d'accès radio pour assurer la communication des paquets de données vers et/ou depuis l'équipement utilisateur mobile (316), la communication d'une demande d'activation de contexte de protocole de données par paquets à la partie réseau central pour un canal de communication pour assurer la communication des paquets de données Internet contenant les différents types de données vers et/ou depuis l'équipement utilisateur mobile (316) par l'intermédiaire du réseau de radiocommunication par paquets, les données de demande comprenant au moins l'un d'un champ spécifiant l'un d'une pluralité de formats de données pour assurer la communication des paquets de données Internet à partir de l'équipement utilisateur (316) vers le réseau central, et d'un champ spécifiant l'un d'une pluralité de formats de données pour assurer la communication des paquets de données Internet à l'équipement utilisateur (316) depuis le réseau central, les formats de données de paquet spécifiant une quantité de données dans chacun des différents types de données, et fournir, en réponse à la demande de modification de contexte de protocole de données par paquets pour établir le canal de communication, un porteur destiné à communiquer les données de paquets Internet par l'intermédiaire du réseau central, et pour chacun des différents types de données d'un porteur d'accès radio ayant un autre ensemble de paramètres de service de qualité pour assurer la communication du paquet de données vers et/ou depuis l'équipement utilisateur mobile (316), dans lequel la partie réseau radio comprend un contrôleur de réseau radio (314), le procédé comprenant la génération d'un indicateur de sous-flux de porteur d'accès radio (830) fournissant une indication du nombre de types différents de données dans la charge utile et du nombre de symboles dans chaque type de données, l'indicateur de sous-flux (830) étant généré en fonction du champ spécifiant le format de données pour assurer la communication des paquets de données vers et/ou depuis l'équipement utilisateur dans les données de demande, pour former une trame de transport (lu-ps) pour chaque paquet de données Internet en combinant les données de charge utile et l'en- tête de chaque paquet de données Internet avec l'indicateur de sous-flux (830), la trame de transport servant à assurer la communication de chaque paquet de données Internet par l'intermédiaire du porteur établi pour le canal de communication entre le noeud de support de passerelle (300) et le contrôleur de réseau radio (314) par l'intermédiaire du noeud de support de service (306), les paquets de données étant mis en communication entre le contrôleur de réseau radio (314) et l'équipement utilisateur mobile (316) en détectant l'indicateur de sous-flux, et conformément à l'indicateur de sous-flux faire en sorte que les données provenant de chacun des différents champs de données puissent communiquer par l'intermédiaire d'un porteur différent du porteur d'accès radio fournissant différents paramètres de qualité de service appropriés au type de données différent.

15. Procédé selon la revendication 14, dans lequel la formation de la trame de transport consiste à générer une unité de données de service à partir des données de charge utile et un en-tête de protocole Internet depuis chaque paquet de données Internet, et en combinant l'unité de données de service avec l'indicateur de sous-flux.

16. Procédé selon la revendication 14 ou la revendication 15, dans lequel la partie réseau radio comprend un contrôleur de réseau radio (314), le procédé consistant à établir le canal de communication en communiquant des données de demande d'accès radio conformément à un protocole de partie d'application de réseau d'accès radio (RANAP) au contrôleur de réseau radio, et
établir, en utilisant une couche de contrôle d'accès au support, le porteur d'accès radio pour chacun de la pluralité de paramètres de qualité de service pour l'un des différents types de données.

17. Procédé selon l'une quelconque des revendications 14, 15 ou 16, le procédé consistant à modifier le format de données pour assurer la communication des données par paquets à un format différent de la pluralité de formats de données, le format de données différent spécifiant une quantité de données différente dans chacun des différents types de données.

18. Procédé selon la revendication 17, dans lequel la modification du format de données consiste à envoyer une demande de modification de contexte de protocole de données par paquets, la demande de modification en spécifiant le format différent de la pluralité de formats de données.

19. Procédé selon la revendication 17, dans lequel la modification du format de données consiste à communiquer d'un signal hors bande comme paquet de modification.

20. Procédé selon la revendication 17, dans lequel la modification du format de données consiste à envoyer un message SIP (protocole d'initiation de session) à une fonction de contrôle d'état d'appel par procuration (P-CSCF) indiquant qu'une modification du format de données est requise, à communiquer la modification de format de données du P-CSCF au noeud de support de passerelle, et à communiquer la modification du noeud de support de passerelle de service (300).

21. Procédé selon l'une quelconque des revendications 14 à 20, dans lequel les données de charge utile du paquet de données Internet comprennent une trame de données formée à partir d'un codage vocal adaptatif multi-débit, la trame de données fournissant la pluralité des différents types de données.

22. Procédé selon la revendication 17 en combinaison avec la revendication 21, dans lequel la modification du format de données consiste à modifier le format de données en fonction d'une modification du débit du codage vocal adaptatif multi-débit.

23. Procédé selon l'une quelconque des revendications 14 à 22, consistant à compresser l'en-tête du paquet de protocole Internet dans le contrôleur de réseau radio pour assurer la communication par l'intermédiaire de l'un des porteurs d'accès radio.

24. Equipement utilisateur mobile (316) adapté pour communiquer des paquets de données Internet avec un terminal correspondant (352) à une couche de protocole Internet par l'intermédiaire d'un réseau radio par paquets selon l'une quelconque des revendications 1 à 15, l'équipement utilisateur mobile comprenant un équipement de terminaison et un terminal mobile, l'équipement de terminaison étant opérationnel pour générer les paquets de données Internet possédant un en-tête de protocole Internet (832), des données de charge utile de chaque paquet de données Internet possédant une pluralité de différents types de données, conformément à l'un d'une pluralité de formats de données, le terminal mobile étant opérationnel pour déterminer l'un des formats de données pouvant être pris en charge, par le réseau de radiocommunication par paquets, communiquer une demande d'activation de contexte de protocole de données par paquets pour un canal de communication pour assurer la communication des paquets de données Internet contenant les différents types de données via un réseau radio par paquets, les données de demande incluant au moins un champ spécifiant le format de données de la pluralité de différents types de données à communiquer à partir de l'utilisateur équipement par l'intermédiaire du réseau radio par paquets, et un champ spécifiant le format de la pluralité de différents types de données à communiquer à l'équipement utilisateur par l'intermédiaire du réseau radio par paquets, les formats de données spécifiant une quantité de données dans chacune des différents types de données dans les paquets de données Internet.

25. Equipement d'utilisateur selon la revendication 24, dans lequel le format de données est indiqué à l'équipement terminal, l'équipement terminal étant opérationnel pour générer les paquets de données Internet conformément au format de données pouvant être pris en charge.
